# EUROPEAN PATENT SPECIFICATION

(11) **EP 4 202 516 B1**
(45) Date of publication and mention of the grant of the patent: **03.12.2025**
(21) Application number: 22205545.1
(22) Date of filing: 04.11.2022
(51) Int. Cl.: G02B 6/42

(54) **METHOD FOR MANUFACTURING AN INTEGRATED OPTICAL PACKAGE**
VERFAHREN ZUR HERSTELLUNG EINER INTEGRIERTEN OPTISCHEN PACKUNG
METHODE DE FABRICATION D'UN BOÎTIER OPTIQUE INTÉGRÉ

(30) Priority: 22.12.2021 US 202117559858
(43) Date of publication of application: 28.06.2023
(73) Proprietor: INTEL Corporation, Santa Clara, CA 95054 (US)
(72) Inventor: KIM, Dowon, 678948 Singapore (SG); MEI, Suohai, Sunnyvale, 94087 (US); GAMBA, Jason, Gilbert, 85298 (US); GANESAN, Sanka, Chandler, 85248 (US)
(74) Representative: Goddar, Heinz J.

(56) References cited:
- EP-B1- 1 018 051
- US-A1- 2017 123 173
- US-A1- 2020 310 052
- US-A1- 2021 247 574
- US-B1- 9 964 719

## Description

### FIELD

Embodiments of the present disclosure generally relate to the field of package assemblies, and in particular integrated optical package assemblies on a wafer.

### BACKGROUND

Continued reduction in the size of mobile electronic devices, such as smart phones and ultrabooks, is a driving force for reducing package sizes and increasing the speed of components within packages. Publication US 2020/310052 A1 discloses a prior art integrated optical package and method.

### SUMMARY OF THE INVENTION

The invention relates to a method according to claim 1. Further embodiments are defined by the dependent claims. **BRIEF DESCRIPTION OF THE DRAWINGS**
FIGs. 1A-1B illustrate cross section side view examples of an integrated optical package as a fanout wafer level package (FOWLP) and an Omni-directional interconnect^{™} (ODI) package, in accordance with various embodiments.
FIG. 2 illustrates examples of a FOWLP that include an optical coupling connector (OCC) in a horizontal configuration (HOCC) and a vertical configuration (VOCC), in accordance with various embodiments.
FIG. 3 illustrates examples of a FOWLP HOCC with optical waveguides, in accordance with various embodiments.
FIG. 4 illustrates an example of a FOWLP HOCC with a mirror array, in accordance with various embodiments.
FIG. 5 illustrates an example of a FOWLP HOCC with adiabatic optical couplers, in accordance with various embodiments.
FIG. 6 illustrates an example of a FOWLP HOCC with a focusing lens array, in accordance with various embodiments.
FIG. 7 illustrates an example of a FOWLP HOCC with a focusing lens array coupled with a collimation lens on a photonic integrated circuit (PIC), in accordance with various embodiments.
FIG. 8 illustrates another example of a FOWLP HOCC cap to protect optical waveguides during manufacture, in accordance with various embodiments.
FIG. 9 illustrates examples of sealing an OCC to a PIC during the manufacturing process, in accordance with various embodiments.
FIG. 10 illustrates another example of a FOWLP VOCC, in accordance with the claimed invention.
FIG. 11 illustrates an example of a FOWLP VOCC cap to protect optical waveguides during manufacture, in accordance with various embodiments.
FIG. 12 illustrates another example of a FOWLP VOCC cap to protect optical waveguides during manufacture, in accordance with various embodiments.
FIG. 13 illustrates an example of a FOWLP VOCC microlens array and receptacle for a fiber attach unit (FAU), in accordance with various embodiments.
FIG. 14 illustrates another example of a FOWLP VOCC cap to protect optical waveguides during manufacture, in accordance with various embodiments.
FIGs. 15A-15I illustrate stages in a manufacturing process to create a FOWLP integrated optical packet, in accordance with various embodiments.
FIGs. 16A-16I illustrate stages in another manufacturing process to create a FOWLP integrated optical packet, in accordance with various embodiments.
FIGs. 17A-17G illustrate stages in a manufacturing process to create an ODI integrated optical packet, in accordance with various embodiments.
FIG. 18 illustrates an example of an ODI VOCC cap to protect optical waveguides during manufacture, in accordance with various embodiments.
FIG. 19 illustrates an example of an ODI VOCC cap to protect an optical lens array during manufacture, in accordance with various embodiments.
FIG. 20 illustrates another example of a FOWLP HOCC cap to protect optical waveguides during manufacture, in accordance with various embodiments.
FIG. 21 illustrates another example of a FOWLP HOCC with a focusing lens array coupled with a collimation lens on a PIC with passive alignment features including v-grooves and protrusions, in accordance with various embodiments.
FIGs. 22A-22I illustrate stages in another manufacturing process to create a FOWLP integrated optical packet that includes a VOCC, in accordance with various embodiments.
FIG. 23 illustrates an example of a process for manufacturing an integrated optical package, in accordance with the claimed invention.
FIG. 24 schematically illustrates a computing device, in accordance with embodiments.

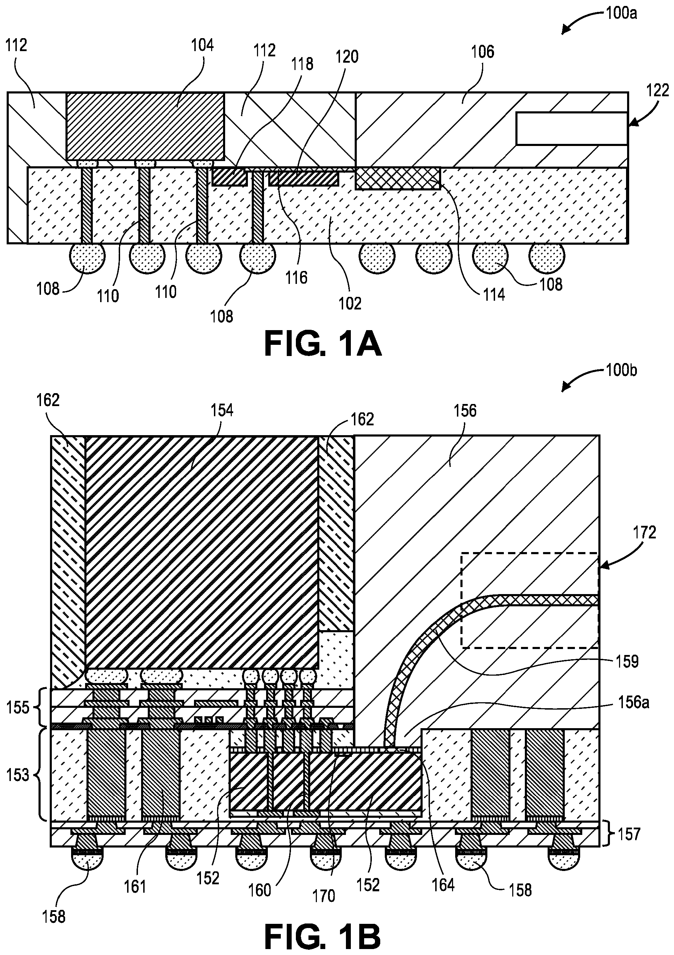

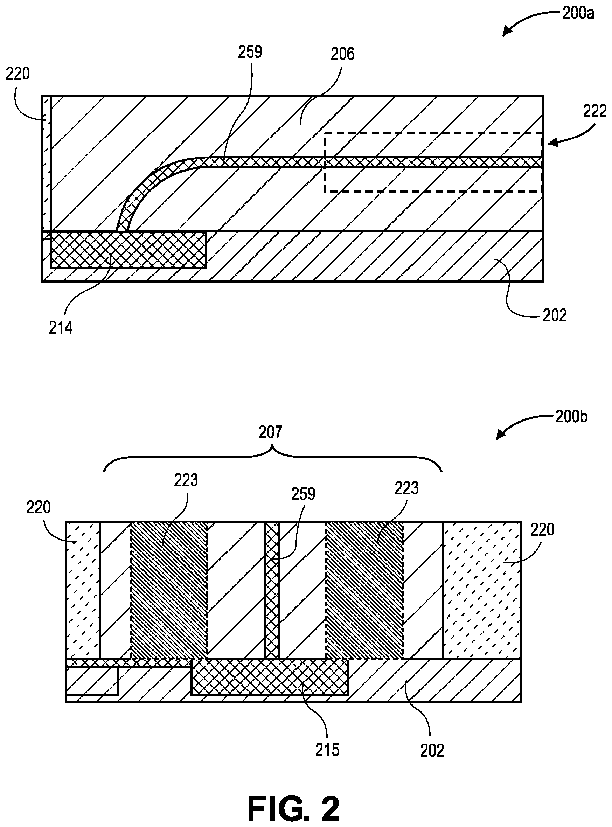

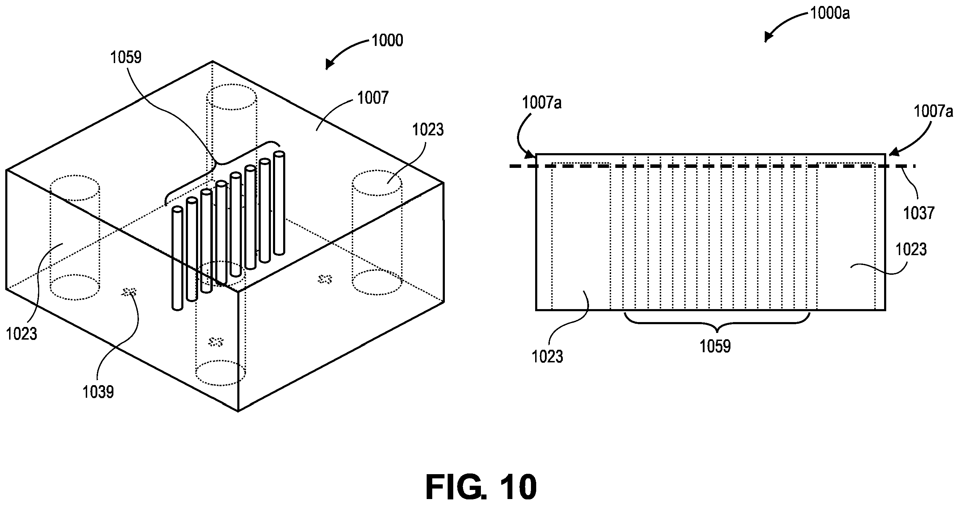

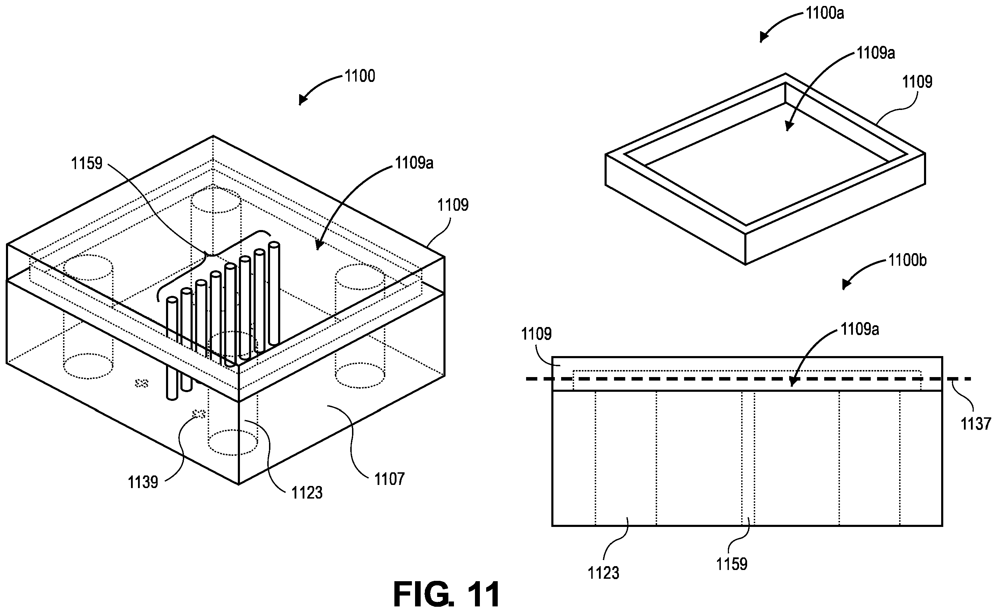

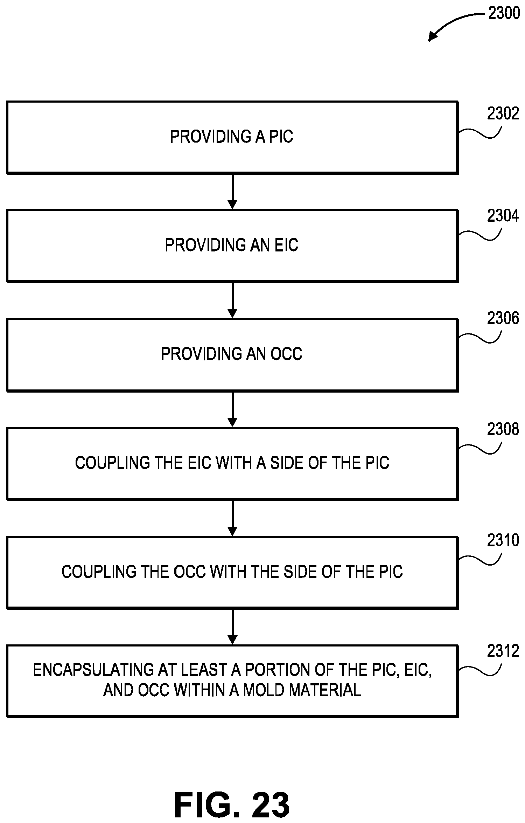

Figures 10 and 23 are according to the claimed invention. Figures 1A and 2 are useful to understand the invention. Figure 11 is an optional embodiment of the claimed invention. The remaining figures are not according to the claimed invention.

### DETAILED DESCRIPTION

Embodiments of the present disclosure may generally relate to systems, apparatus, techniques, and/or processes directed to creating integrated photonics packages that include a PIC, an electronic IC (EIC), and an OCC that are in a single package. In embodiments, the PIC, EIC, and OCC may be partially or fully embedded in a mold compound. In embodiments, integrated photonics packages may be created using Fan Out Wafer Level Package (FOWLP) manufacturing techniques or ODI (Omni Directional Interconnect) manufacturing techniques. In embodiments, the integrated photonics package may be referred to as an optical module or an integrated optical module.

In embodiments, integrated photonics packages may be created on a wafer and subsequently diced or simulated. In embodiments, the OCC may have openings to optically couple fiber waveguides at either a side of the OCC, which may be referred to as a horizontal HOCC optical coupling, or on the top of the OCC which may be referred to as a VOCC optical coupling. Embodiments described herein include caps or other protective measures that may be attached to the OCC to maintain the optical integrity of the photonics package after manufacture, for example by preventing mold material from blocking optical paths of the OCC. In embodiments, these caps may be removed during the wafer dicing process. In embodiments, guide holes and/or other physical features may be used to facilitate proper alignment of the PIC, EIC, and OCC components during manufacture. The packaging of the OCC to the PIC early in the manufacturing process as described in embodiments herein may be referred to as an "optics first" manufacturing approach.

By fully embedding the EIC, PIC, and OCC within a mold, a high-performance optical module can be integrated, and may result in a compact form factor with high optical/electrical bandwidth and bandwidth density with increased I/O counts. In embodiments, radiofrequency (RF) performance may be improved by optimizing RF signal transmission lines within a redistribution layer (RDL) to be precisely fabricated for impedance matching, and removing the need for bond wires. In embodiments, due to the embedding within a mold compound, these optical modules may be rigidly held in place and thus resistant to external forces. In addition, contamination due to damage caused by die-to-die or die-to-board packaging processes and handling may be minimized, improving total cycle time and yield, and reducing cost by performing packaging processes at the wafer level, for example using glass or a silicon wafer as a carrier, or at the panel level, for example using a glass panel as a temporary carrier. In embodiments, an external optical interconnection to the optical module may be accomplished, for example, by plugging a multi-fiber push on (MPO) connector. In embodiments, an assembled final optical module may be substrate-less, and therefore surface mountable by reflow or flip-chip bonding processes.

Legacy implementations that manufacture and/or implement optical packages, at the die level or the board level, have a number of challenges. For example, they have a higher cost associated with their longer total cycle time of a single die to die assembly for an optical packaging. This results in lower yield due to handling issues and contamination during the packaging process. In addition, legacy implementations have a technical limitation for integrating high-performance optical modules with smaller form factors, because of increased requirements of high-bandwidth, bandwidth density, and I/O counts for applications such as data center switching systems, artificial intelligence, and CPU-to-CPU (memory) interconnections. In addition, in legacy implementations there is limited signal integrity and electrical I/O count that is caused by using bond wires between the photonics device and electric device. In addition, signal transmission lines that may be on a printed circuit board (PCB) may degrade signal bandwidth and I/O count.

Legacy implementations for optical packaging within FOWLP processes use an "optics last" approach, meaning that the fiber array or optical coupling connector is not embedded within a mold along with other components that include the PIC and EIC. And the coupler array area of the PIC is exposed in the FOWLP process of the 'optics last' to align the fiber array at the last stage of packaging, which has difficulty in optimizing the FOWLP process and weakens the robustness of the finally integrated module. Another approach with the optical fiber coupling to the legacy PIC implementation by inserting optical fiber arrays to blind vias (BVS) of the backside of the PIC, which creates an issue if the fiber array is vertically inserted into the PIC. This requires legacy package modules to have a higher profile, which makes modular integration within a standard housing challenging.

Furthermore, in legacy implementations, a dangling fiber array creates handling issues in high-volume production. Other legacy implementations integrate only an EIC within a mold and separately assemble a PIC and fiber array, which increases packaging cost and manufacturing time. Other legacy implementations of a "optics last" process occurs with the integration of the final optical module after PIC/EIC integration, which creates yield issues due to the optical coupler areas being subject to contamination and spoiling.

In the following detailed description, reference is made to the accompanying drawings which form a part hereof, wherein like numerals designate like parts throughout, and in which is shown by way of illustration embodiments in which the subject matter of the present disclosure may be practiced. It is to be understood that other embodiments may be utilized and structural or logical changes may be made without departing from the scope of the present invention, which is defined by the appended claims. Therefore, the following detailed description is not to be taken in a limiting sense, and the scope of embodiments is defined by the appended claims.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use perspective-based descriptions such as top/bottom, in/out, over/under, and the like. Such descriptions are merely used to facilitate the discussion and are not intended to restrict the application of embodiments described herein to any particular orientation.

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

The term "coupled with," along with its derivatives, may be used herein. "Coupled" may mean one or more of the following. "Coupled" may mean that two or more elements are in direct physical or electrical contact. However, "coupled" may also mean that two or more elements indirectly contact each other, but yet still cooperate or interact with each other, and may mean that one or more other elements are coupled or connected between the elements that are said to be coupled with each other. The term "directly coupled" may mean that two or more elements are in direct contact.

Various operations may be described as multiple discrete operations in turn, in a manner that is most helpful in understanding the claimed subject matter. However, the order of description should not be construed as to imply that these operations are necessarily order dependent.

As used herein, the term "module" may refer to, be part of, or include an ASIC, an electronic circuit, a processor (shared, dedicated, or group) and/or memory (shared, dedicated, or group) that execute one or more software or firmware programs, a combinational logic circuit, and/or other suitable components that provide the described functionality.

Various Figures herein may depict one or more layers of one or more package assemblies. The layers depicted herein are depicted as examples of relative positions of the layers of the different package assemblies. The layers are depicted for the purposes of explanation, and are not drawn to scale. Therefore, comparative sizes of layers should not be assumed from the Figures, and sizes, thicknesses, or dimensions may be assumed for some embodiments only where specifically indicated or discussed.

FIGs. 1A-1B illustrate cross section side view examples of an integrated optical package as a FOWLP and an ODI package, in accordance with various embodiments. FIG. 1A shows integrated optical package 100a that is implemented as a FOWLP, and includes a PIC 102, and EIC 104, and an OCC 106. In embodiments, a bottom side of the PIC 102 may include interconnects 108, which may be solder balls, pads, or some other electrical connection technique. A plurality of electrically conductive through silicon vias (TSV) 110 may extend into or through the PIC 102, and may electrically couple with the EIC 104. A mold compound 112, such as an epoxy, may fully encapsulate or partially encapsulate the PIC 102, EIC 104, and OCC 106.

In embodiments, the PIC 102 may include one or more optical couplers 114 optically coupled through waveguide 116 to a photodetector (PD) 118, or a laser-diode/ modulator (LD-MOD) 120. In embodiments, the EIC 104 may include a transimpedance amplifier (TIA) (not shown) for the PD 118, and a driver integrated circuit (IC) (not shown) for the LD-MOD 120. The OCC 106 may include embedded optical fiber array or waveguide array (not shown but discussed in greater detail below) to couple light to and from the coupler 114 of the PIC 102. The OCC 106 may also include one or more guide holes 122 to facilitate passive optical coupling with an external MPO connector fiber cable (not shown). Note that the OCC 106, in embodiments, is a specially designed chip-type optical connector without a dangling fiber array. It should be noted that the optical coupler 114, in embodiments, may be implemented as an edge coupler, a vertical coupler, or an evanescent coupler as discussed further below.

In embodiments, FIG. 1A shows a baseline packaging structure of a fully-embedded FOWLP process for optical module integration. EIC 104 may be flip-chip bonded on the PIC 102, and in embodiments a chip-type OCC 106 may be attached to the PIC 102 die using a UV-curable epoxy. In embodiments, the OCC 106 as a chip-type enables assembly by a direct pick and place die attach process, using UV-curable epoxy. Protection techniques for protecting optical facets and guide holes 122 during mold compound 112 flow during the FOWLP process, as discussed further below.

FIG. 1B shows integrated optical package 100b that is implemented as an ODI package that includes a PIC 152, an EIC 154, and an OCC 156. In embodiments, a bottom side of the PIC 152 may electrically and physically couple with buildup layer 157, which may include interconnects 158 that may include solder, pads, or use some other electrical connection technique. A plurality of electrically conductive through silicon vias (TSV) 160 may extend into or through the PIC 152, and may electrically couple with the EIC 154. In embodiments, the PIC 152 may be within a layer 153. The layer 153 may include electrically conductive TSV 161 to electrically couple with the EIC 154. A mold compound 162, such as an epoxy, may fully encapsulate or partially encapsulate the PIC 152, EIC 154, and OCC 156.

In embodiments, the PIC 152 may include one or more optical couplers 164 optically coupled through waveguide 159 to a light detector/ modulator (LD-MOD) 170. In embodiments, the EIC 154 may include a transimpedance amplifier (TIA) (not shown) and a driver integrated circuit (IC) (not shown) for the LD-MOD 170. The OCC 156 may include an embedded optical fiber array or waveguide array 159 to couple light to and from the optical coupler 164 of the PIC 152. The OCC 156 may also include one or more guide holes 172 for passive optical coupling with an external MPO connector fiber cable (not shown). Note that the OCC 156, in embodiments, is a specially designed chip-type optical connector without a dangling fiber array.

In embodiments, the OCC 156 may have an extended portion 156a that is formed to physically and optically couple the fiber-optic array or waveguide array 159 with the optical coupler 164. In embodiments, routing layers 155 may be created on top of the layer 153 to provide electrical routing between various components of the integrated optical package 100b. It should be noted that the optical coupler 164, in embodiments, may be implemented as an edge coupler, a vertical coupler, or an evanescent coupler.

FIG. 2 illustrates examples of a FOWLP that include an optical coupling connector (OCC) as a HOCC and a VOCC, in accordance with various embodiments. Partial integrated optical package 200a may be similar to integrated optical package 100a of FIG. 1. Partial integrated optical package 200a includes an OCC 206, a portion of a mold compound 220, and a portion of a PIC 202 that includes an optical coupler 214, which may be similar to OCC 106, mold compound 120, PIC 102, and optical coupler 114 of FIG. 1. The OCC 206 includes an embedded optical fiber array or waveguide array 259 to couple light to and from the coupler 214 of the PIC 202. Guide holes 222 may serve to align a FAU (not shown) with the embedded optical fiber array or waveguide array 259. The OCC 206 embodiments may be referred to as a HOCC implementation.

Partial integrated optical package 200b may be similar to integrated optical package 100a of FIG. 1. Partial integrated optical package 200b includes an OCC 207, portions of a mold compound 220, and a portion of a PIC 202 that includes an optical coupler 215. These may be similar to OCC 106, mold compound 120, PIC 102, and optical coupler 114 of FIG. 1. OCC 207 includes an optical fiber array or waveguide array 259, which extends to a top of the OCC 207. A plurality of guide holes 223, may serve to align a FAU (not shown) with the embedded optical fiber array or waveguide array 259. The OCC 207 embodiments may be referred to as a VOCC implementation.

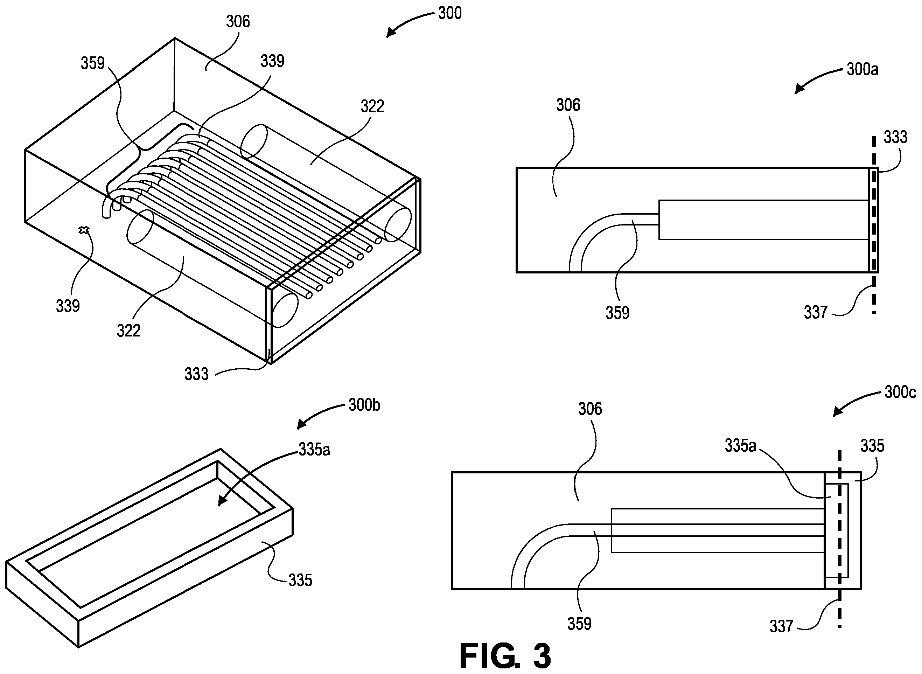

FIG. 3 illustrates examples of a FOWLP HOCC with optical waveguides, in accordance with various embodiments. Diagram 300 shows a perspective view of an HOCC 306, which may be similar to OCC 200a of FIG. 2. Embedded optical fiber array or waveguide array 359, which may be similar to embedded optical fiber array or waveguide array 259 of FIG. 2, extends from an end of the HOCC 306 and curves down into the bottom surface of the HOCC 306, providing a 90° bend. Guide holes 322 may be placed on either side or both sides of the embedded optical fiber array or waveguide array 359. In embodiments, alignment fiducials 339 may be placed on the bottom surface of the HOCC 306 and may be used for alignment with complementary fiducials on a top surface of a PIC, such as PIC 202 of FIG. 2.

In embodiments, prior to placing the HOCC 306 into the integrated optical package, a temporary cover 333 may be placed on an end of the HOCC 306 and covering an end of the embedded optical fiber array or waveguide array 359. In embodiments, the temporary cover 333 prevents the contamination of fiber facets and guide holes 322 from the flow of mold compound during manufacture, for example when mold compound 220 of FIG. 2 is flowed. In embodiments, the temporary cover 333 may be a manufactured lid or tape.

Diagram 300a shows a cross section side view of the HOCC 306, showing a dicing line 337 that indicates where a wafer cut should be made in order to cut through the temporary cover 333 at the singulation stage, and to expose the guide holes 322 and the embedded optical fiber array or waveguide array 359 facets. In embodiments, after singulation, residues of the temporary cover 333 may be removed and additional polishing may be done for better surface quality of the exposed guide holes 322 and facets.

Diagrams 300b and 300c show an alternative cap 335 that may be used instead of the temporary cover 333. The cap 335 includes a cavity 335a. When the cap 335 is placed on the end of the HOCC 306, the cavity 335a provides a void space around the end of the embedded optical fiber array or waveguide array 359. Thus, dicing along dicing line 337 will dice through the cavity 335a, thus minimizing the amount of residue that may block the embedded optical fiber array or waveguide array 359.

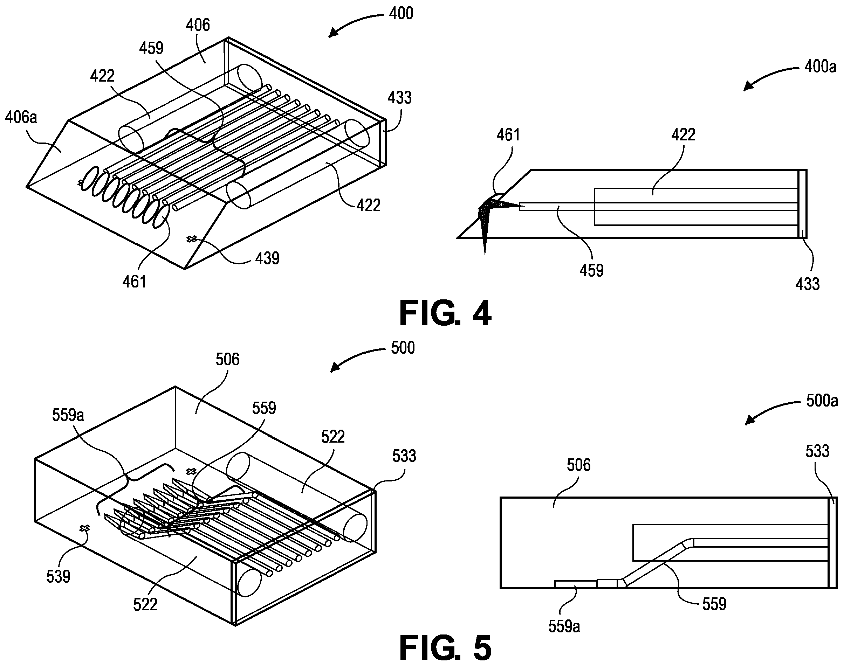

FIG. 4 illustrates an example of a FOWLP HOCC with a mirror array, in accordance with various embodiments. Diagram 400 shows a perspective view of an HOCC 406, which may be similar to OCC 200a of FIG. 2. Embedded optical fiber array or waveguide array 459, which may be similar to embedded optical fiber array or waveguide array 259 of FIG. 2, extends from an end of the HOCC 406 to the opposite end of the HOCC 406a, which is a 45° angle. A mirror array 461 may be placed on the end 406a so that light to and from the embedded optical fiber array or waveguide array 459 is transmitted at a 90° angle as shown. In embodiments, the mirror array 461 may be a total internal reflection (TIR) mirror array. In embodiments, alignment fiducials 439 may be placed on the bottom surface of the HOCC 406 for alignment with complementary fiducials on a top surface of the PIC, such as PIC 202 of FIG. 2.

In embodiments, prior to placing the HOCC 406 into the integrated optical package, a temporary cover 433 may be placed on an end of the HOCC 406 and covering an end of the embedded optical fiber array or waveguide array 459. In embodiments, the temporary cover 433 may be similar to the temporary covers 333, 300a, 300b, and 300c of FIG. 3. Diagram 400a shows a cross section side view of the HOCC 406

FIG. 5 illustrates an example of a FOWLP HOCC with adiabatic optical couplers, in accordance with various embodiments. Diagram 500 shows a perspective view of an HOCC 506, which may be similar to OCC 200a of FIG. 2. Embedded optical fiber array or waveguide array 559, which may be similar to embedded optical fiber array or waveguide array 259 of FIG. 2, extends from an end of the HOCC 506 and transitions to adiabatic couplers 559a at the bottom of the HOCC 506. In embodiments, alignment fiducials 539 may be placed on the bottom surface of the HOCC 506 that may be used for alignment with complementary fiducials on a top surface of the PIC, such as PIC 202 of FIG. 2.

In embodiments, prior to placing the HOCC 506 into the integrated optical package, a temporary cover 533 may be placed on an end of the HOCC 506 and covering an end of the embedded optical fiber array or waveguide array 559. In embodiments, the temporary cover 533 may be similar to the temporary covers 333, 300a, 300b, and 300c of FIG. 3. Diagram 500a shows a cross section side view of the HOCC 506.

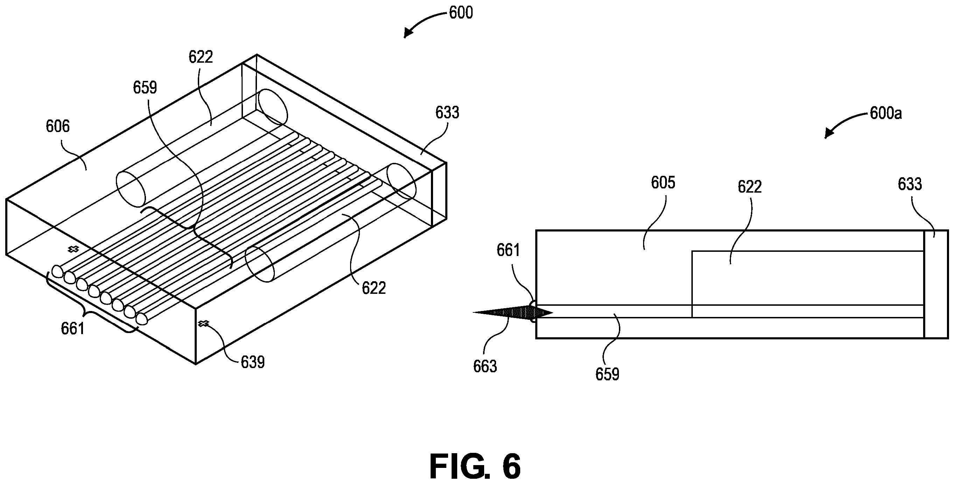

FIG. 6 illustrates an example of a FOWLP HOCC with a focusing lens array, in accordance with various embodiments. Diagram 600 shows a perspective view of an HOCC 606, which may be similar to OCC 200a of FIG. 2. Embedded optical fiber array or waveguide array 659, which may be similar to embedded optical fiber array or waveguide array 259 of FIG. 2, extends from an end of the HOCC 606 through to the opposite and of the HOCC 606. In embodiments, the embedded optical fiber array or waveguide array 659 may be at or near at the bottom of the HOCC 606. A focusing lens array 661 may be coupled with the embedded optical fiber array or waveguide array 659, and may be used to focus and/or align an optical beam 663 from the PIC, such as a PIC 202 of FIG. 2. In embodiments, alignment fiducials 639 may be placed on the bottom surface of the HOCC 606 that may be used for alignment with complementary fiducials on a top surface of the PIC, such as PIC 202 of FIG. 2.

In embodiments, prior to placing the HOCC 606 into the integrated optical package, a temporary cover 633 may be placed on an end of the HOCC 606 and covering an end of the embedded optical fiber array or waveguide array 659. In embodiments, the temporary cover 633 may be similar to the temporary covers 333, 300a, 300b, and 300c of FIG. 3. Diagram 600a shows a cross section side view of the HOCC 606. In embodiments, the temporary cover 633 may include a Polydimethylsiloxane (PDMS) material.

Note that in embodiments, FIGs. 3-6 may require accurate alignment to the optical couplers of the PIC, such as optical coupler 214 of PIC 202 of FIG. 2. In embodiments, this accuracy may be less than .5 µm at three Sigma.

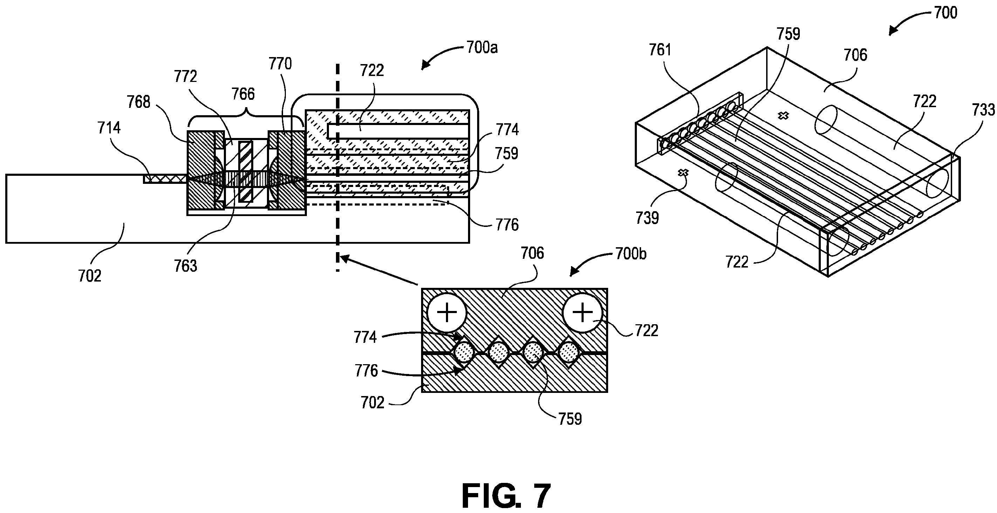

FIG. 7 illustrates an example of a FOWLP HOCC with a focusing lens array coupled with a collimation lens on a photonic integrated circuit (PIC), in accordance with various embodiments. Diagram 700 shows a perspective view and diagram 700b shows a cross-sectional view of an HOCC 706 on PIC, which may be similar to OCC 200a of FIG. 2. Diagram 700a shows a cross section side view of the HOCC 706 and the PIC 702.

Embedded optical fiber array or waveguide array 759, which may be similar to embedded optical fiber array or waveguide array 259 of FIG. 2, extends from an end of the HOCC 706 through to the opposite end of the HOCC 706. In embodiments, the embedded optical fiber array or waveguide array 759 may be at or near at the bottom of the HOCC 706. In other embodiments, the embedded optical fiber array or waveguide array 759 may be positioned within the V-grooves 774, within a bottom surface of the HOCC 706, and the V-grooves 776 in a top surface of the PIC 702, which may be similar to PIC 202 of FIG. 2. In embodiments, a V-grooves 774 may be aligned by a moderate-accuracy (< 3 µm) pick and place machine with the V-grooves 776.

In embodiments, a focusing lens array 761 may be coupled with the embedded optical fiber array or waveguide array 759, and may be used to focus and/or align the light beam 763. In embodiments, a micro lens array 766 may be used to further align the light beam 763. The micro lens array 766 may include a first lens array 770 coupled with the HOCC 706, and a second lens array 768 coupled with the optical coupler 714 of the PIC 702. In embodiments, an isolator 772 may be placed between the first lens array 770 and the second lens array 768.

In embodiments, alignment fiducials 739 may be placed on the bottom surface of the HOCC 706 that may be used for alignment with complementary fiducials on a top surface of the PIC 702. In embodiments, prior to placing the HOCC 706 into the integrated optical package, a temporary cover 733 may be placed on an end of the HOCC 706 and covering an end of the embedded optical fiber array or waveguide array 759. In embodiments, the temporary cover 733 may be similar to the temporary covers 333, 300a, 300b, and 300c of FIG. 3.

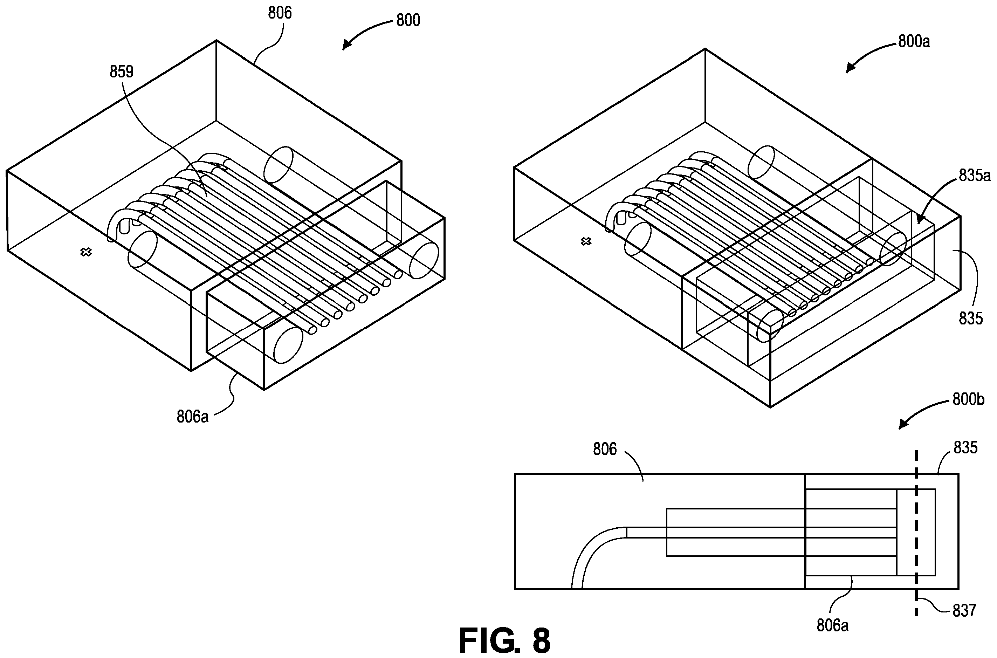

FIG. 8 illustrates another example of a FOWLP HOCC cap to protect optical waveguides during manufacture, in accordance with various embodiments. Diagrams 800 and 800a show perspective views of an HOCC 806, which may be similar to OCC 200a of FIG. 2. Embedded optical fiber array or waveguide array 859, which may be similar to embedded optical fiber array or waveguide array 259 of FIG. 2, extends from an end of the HOCC 806 through to the bottom of the HOCC 806. An extended housing 806a may protrude from the HOCC 806 main body. In embodiments, portions of the HOCC 806 main body may be removed to provide the extended housing 806a.

A cap 835 may fit over the extended housing 806a and cover an end of the embedded optical fiber array or waveguide array 859. In embodiments, the temporary cap 835 may be similar to the temporary cover 333 of FIG. 3. The cap 835 may include a cavity 835a that provides an airspace next to optical fiber array or waveguide array 859. Diagram 800b shows a cross section side view of the HOCC 806 and cap 835. A dicing line 837 shows where the cap 835 may be diced through the cavity 835a to expose the optical fiber array or waveguide array 859.

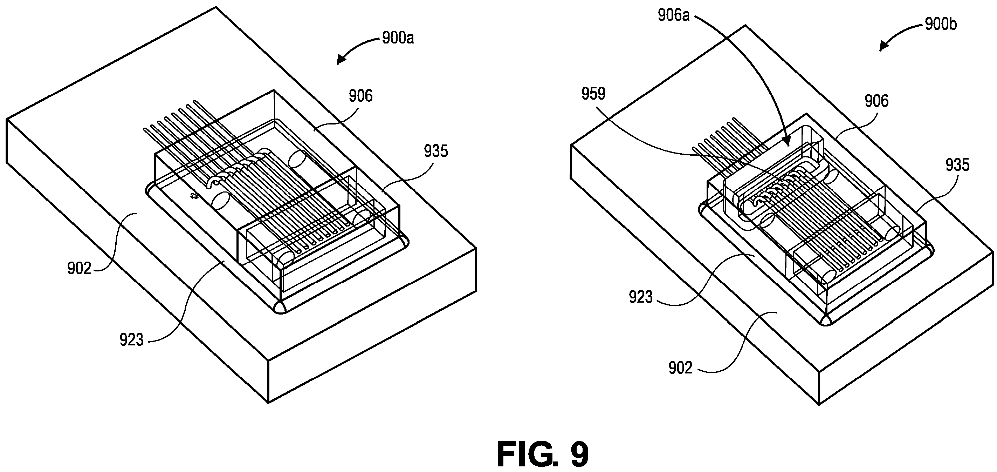

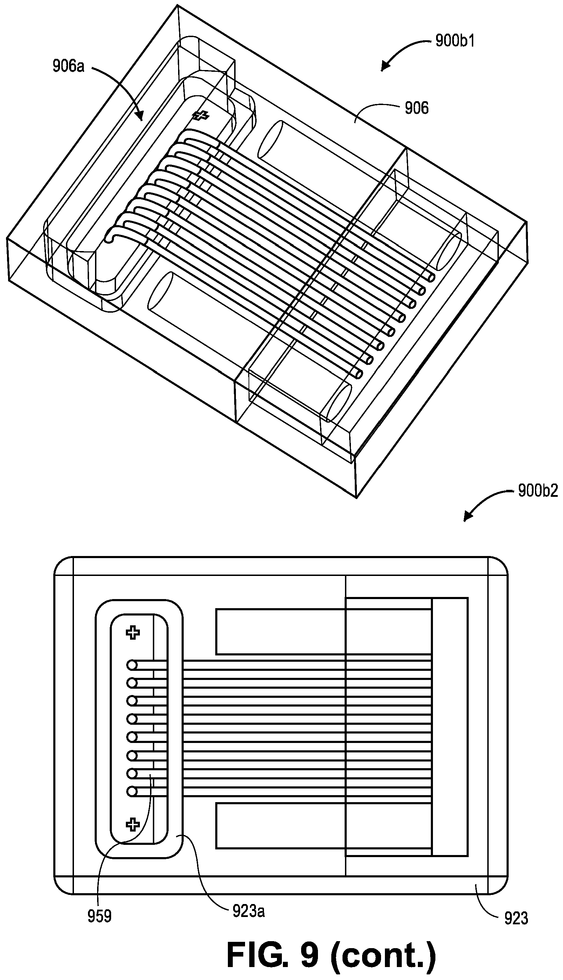

FIG. 9 illustrates examples of sealing an OCC to a PIC during the manufacturing process, in accordance with various embodiments. Diagram 900a shows a perspective view of a HOCC 906 that includes a cap 935 that is sealed to a PIC 902. HOCC 906 and PIC 902 may be similar to HOCC 206 and PIC 202, of FIG. 2. Cap 935 may be similar to cap 835 of FIG. 8. As shown, epoxy 923 is applied around the edges of the HOCC 906 and cap 935 where the edges meet the surface of the PIC 902. In embodiments, the epoxy 923 may be a UV-curable polymeric adhesive.

Diagram 900b, which may be similar to diagram 900a, shows additional epoxy dispensing from a top hole 906a that is used to seal the surrounding of optical facets of the embedded optical fiber array or waveguide array 959 where they meet the surface of the PIC 902. Diagram 900b1 shows a detailed perspective view of the HOCC 906 and the top hole 906a into which additional epoxy 923a may be inserted. Diagram 900b2 is a bottom view that includes the HOCC 906 with the additional epoxy 923 surrounding the optical facets of the embedded optical fiber array or waveguide array 959, and the epoxy 923 surrounding the HOCC 906 and cap 935. The epoxies 923, 923a provide the optical facets with additional protection when liquid mold compound is applied.

FIG. 10 illustrates a FOWLP VOCC, obtained by the method of the claimed invention. Diagram 1000 includes a VOCC 1007 that includes guide holes 1023 and an embedded optical fiber array or waveguide array 1059, which may be similar to VOCC 207, guide holes 223, and embedded optical fiber array or waveguide array 259 of FIG. 2. In addition, fiducials 1039 are shown which may be used to align the VOCC 1007 with a PIC, such as PIC 202 of FIG. 2. Note that the guide holes 1023 do not extend to the top of the VOCC 1007, so that during assembly the guide holes 1023 are not filled with mold flow during the FOWLP process.

Diagram 1000a shows a cross section side view of the VOCC 1007 at the embedded optical fiber array or waveguide array 1059. According to the claimed invention, after the mold flow during the FOWLP process, a portion 1007a of the VOOC 1007 is polished or ground down to a polishing line 1037 to expose and provide access to the top opening of the guide hole 1023. This provides easy and clean access to corresponding posts within an FAU (not shown) prior to optical attachment with the VOCC 1007.

FIG. 11 illustrates an example of a FOWLP VOCC cap to protect optical waveguides during manufacture, in accordance with various embodiments. Diagram 1100 shows a perspective view of a VOCC 1107 that includes guide holes 1123 and an embedded optical fiber array or waveguide array 1159, which may be similar to VOCC 1007, guide holes 1023, and embedded optical fiber array or waveguide array 1059 of FIG. 10. In addition, fiducials 1139 are shown which may be used to align the VOCC 1107 with a PIC, such as PIC 202 of FIG. 2. In addition, a cap 1109 is shown that covers a top of the VOCC 1107. In embodiments, the cap 1109 may be a tape or other material that lays across the top of the VOCC 1107. In embodiments, the cap 1109 may be a structure that includes a cavity 1109a.

Diagram 1100a shows a perspective view of the cap 1109 and the cavity 1109a. Note that when the cap 1109 is in place, any mold flow during the FOWLP process does not enter into the guide holes 1123 nor does it obscure the embedded optical fiber array or waveguide array 1159. Diagram 1100b shows a cross section side view where at least a portion of the cap 1109 is polished off down to the polishing line 1137 to expose the guide holes 1123 and also the ends of the embedded optical fiber array or waveguide array 1159.

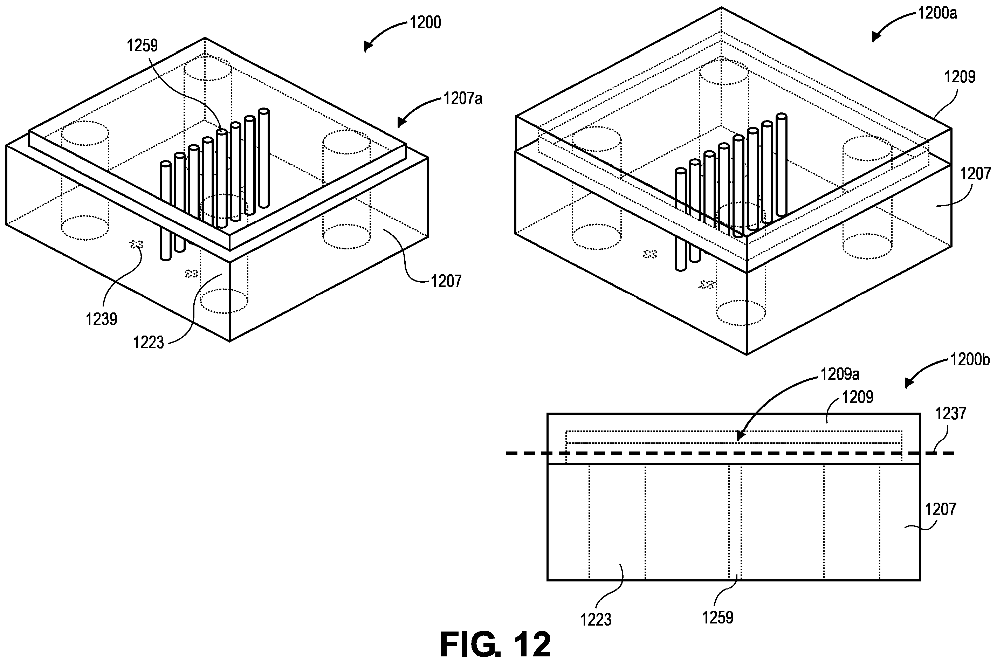

FIG. 12 illustrates another example of a FOWLP VOCC cap to protect optical waveguides during manufacture, in accordance with various embodiments. Diagram 1200 shows a perspective view of a VOCC 1207 that includes guide holes 1223 and an embedded optical fiber array or waveguide array 1257, which may be similar to VOCC 1007, guide holes 1023, and embedded optical fiber array or waveguide array 1059 of FIG. 10. In addition, fiducials 1239 are shown which may be used to align the VOCC 1207 with a PIC, such as PIC 202 of FIG. 2. In addition, a cap 1209 is shown that covers a top of the VOCC 1207, and may fit within a notch 1207a around the top of the VOCC 1207. In embodiments, the cap 1209 may be a lid structure that includes a cavity 1209a.

Diagram 1200a shows a perspective view of the cap 1209 on top of the VOCC 1207. Note that when the cap 1209 is in place, any mold flow during the FOWLP process does not enter into the guide holes 1223 nor does it obscure the embedded optical fiber array or waveguide array 1259. Diagram 1200b shows a cross section side view where at least a portion of the cap 1209 is polished off down to the polishing line 1237 to expose the guide holes 1223 and also the ends of the embedded optical fiber array or waveguide array 1259.

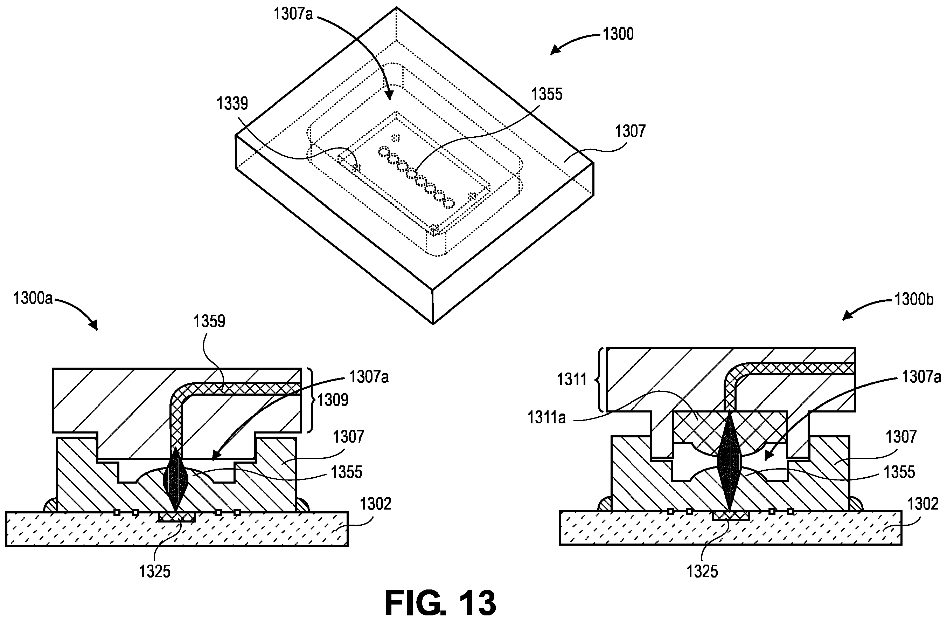

FIG. 13 illustrates an example of a FOWLP VOCC microlens array and receptacle for a fiber attach unit (FAU), in accordance with various embodiments. Diagram 1300 shows a perspective view of a VOCC 1307 with a microlens array 1355 within a cavity 1307a of the VOCC 1307. In embodiments, the VOCC 1307 may be used to align and to optically couple with a FAU, such as FAU 1309, 1311 discussed below. In embodiments, the VOCC 1307 may include fiducials 1339 that may be used to align the VOCC 1307 with a PIC, such as PIC 202 of FIG. 2.

Diagram 1300a shows a side view cross section of an FAU 1309 that is physically and optically coupled with VOCC 1307. The microlens array 1355 of VOCC 1307 is physically coupled with a coupler array 1325 of PIC 1302. The fiber/waveguide array 1359 of FAU 1309 is optically coupled to the mircolens array 1355 of VOCC 1307. As shown, a portion of the FAU 1309 extends within the cavity 1307a, and is aligned with the lens array 1355. Diagram 1300b shows another side view cross section of a FAU 1311 that includes a refocusing lens 1311a coupled with the FAU 1311. In embodiments, the refocusing lens 1311a may refocus a collimated light beam that may be transmitted to and/or received from the lens array 1355 to/from the fiber/waveguide of the FAU.

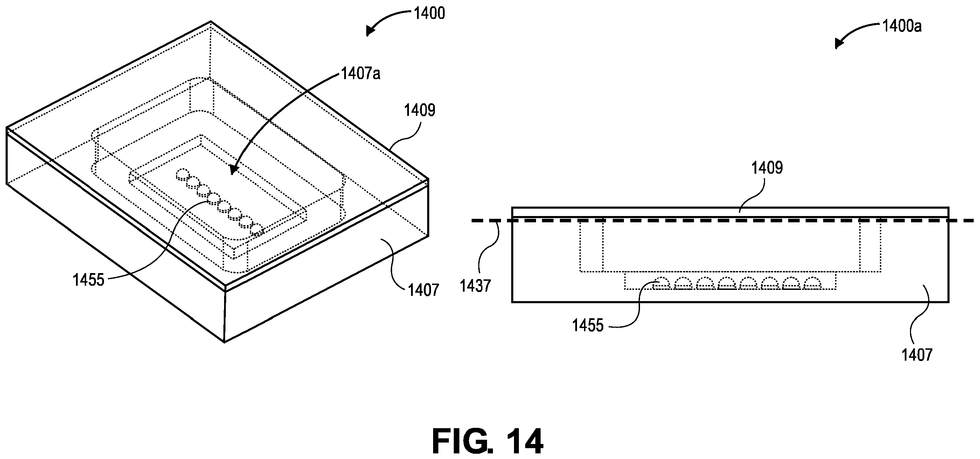

FIG. 14 illustrates another example of a FOWLP VOCC cap to protect optical waveguides during manufacture, in accordance with various embodiments. Diagram 1400 shows a perspective view of a VOCC 1407 and includes a lens array 1455 within a cavity 1407a that may be similar to VOCC 1307, lens array 1355, and cavity 1307a of FIG. 13. A cap 1409 may be placed over a top of the VOCC 1407 so that any mold flow during the FOWLP process does not enter into the cavity 1407a and obscure the lens array 1455.

Diagram 1400a shows a cross section side view that shows the cap 1409 being ground or polished away down to the polishing line 1437. This polishing occurs after the mold flow in order to expose a clean cavity 1407a and unobstructed lens array 1455 so that an FAU, such as FAU 1309 or FAU 1311 of FIG. 13 may be subsequently optically attached.

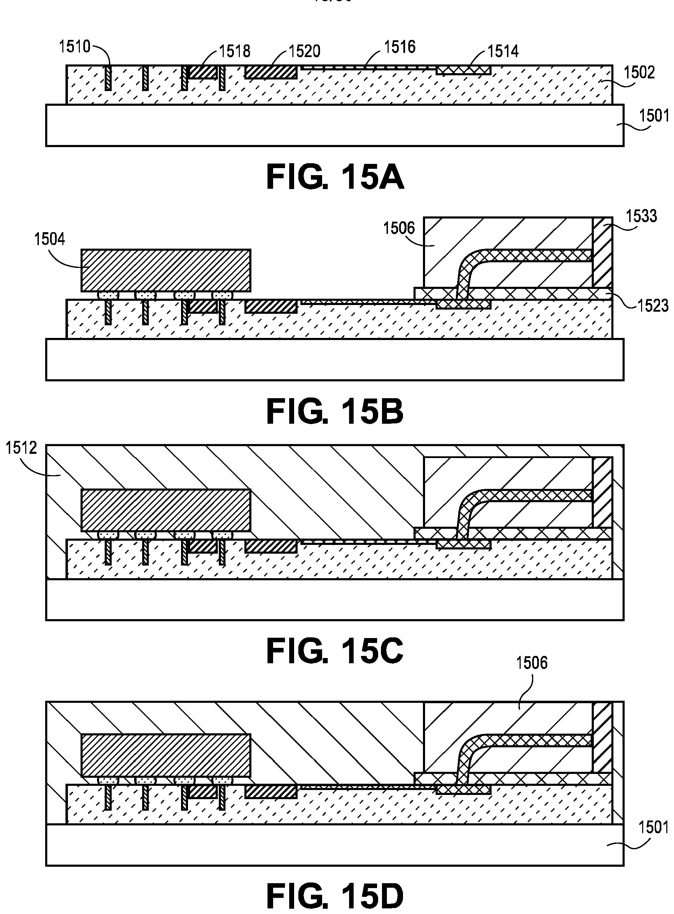

FIGs. 15A-15I illustrate stages in a manufacturing process to create a FOWLP integrated optical packet, in accordance with various embodiments. This manufacturing process may be performed using techniques, processes, apparatus, and/or systems described herein.

FIG. 15A shows a stage in the manufacturing process where a PIC 1502 is placed on a carrier wafer 1501. In embodiments, the carrier wafer may be a glass wafer or a silicon wafer. In embodiments, the PIC 1502 may include a plurality of electrically conductive TSV 1510, a photodetector 1518, a LD-MOD 1520, and optical waveguide 1516 that optically coupled with an optical coupler 1514. These may be similar to PIC 102, plurality of electrically conductive TSV 110, a photodetector 118, a LD-MOD 120, and optical waveguide 116 of FIG. 1A.

FIG. 15B shows a stage in the manufacturing process where an EIC 1504 is physically and electrically coupled to a surface of the PIC 1502, and a HOCC 1506 may be physically and optically coupled to a surface of the PIC 1502. The EIC 1504 may be similar to EIC 104 of FIG. 1A, and the HOCC 1506 may be similar to HOCC 206 of FIG. 2. An epoxy 1523, which may be similar to epoxy 923 of FIG. 9, may be used to secure the HOCC 1506 to the PIC 1502. In embodiments, the HOCC 1506 may include a cap 1533, which may be similar to cap 333 of FIG. 3.

FIG. 15C shows a stage in the manufacturing process where a mold compound 1512, which may be similar to mold 112 of FIG. 1A, may be applied to the entire structure. In embodiments, the mold 1512 may partially or fully encase the entire structure.

FIG. 15D shows a stage in the manufacturing process where a portion of the mold 1512 is ground and cleaned to top surface of the HOCC 1506.

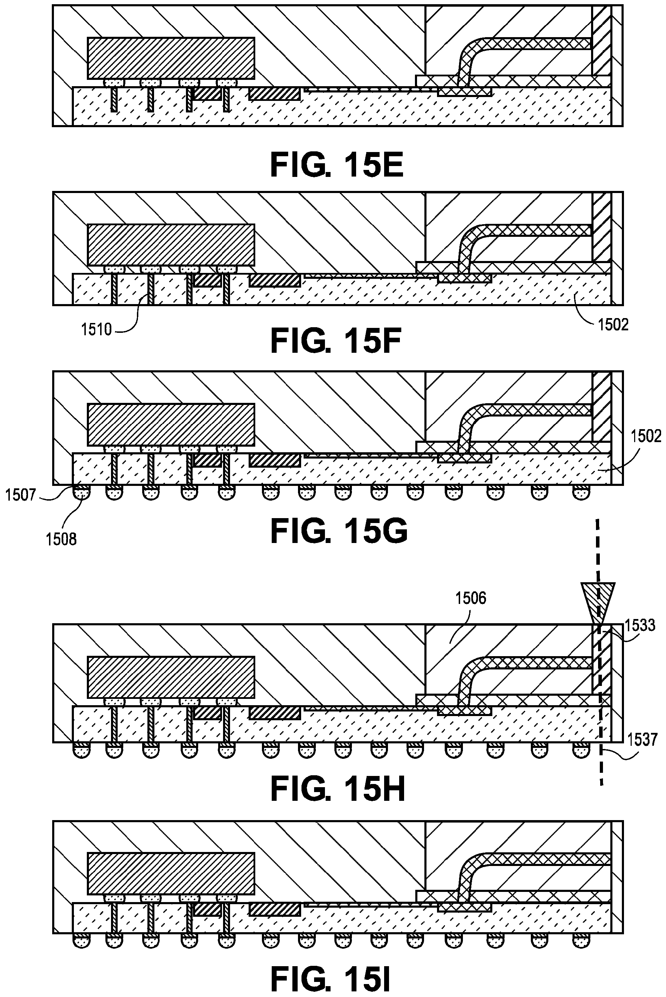

FIG. 15E shows a stage in the manufacturing process where the carrier 1501 is debonded and removed.

FIG. 15F shows a stage in the manufacturing process where the bottom side of the PIC 1502 is planarized to expose the electrically conductive TSV 1510. In embodiments, this stage may require the package to be flipped using a temporary carrier attached to the top of the mold surface.

FIG. 15G shows a stage in the manufacturing process where a redistribution layer (RDL) 1507 may be placed on the surface of the PIC 1502, and solder bumps 1508, which may be similar to bumps 108 of FIG. 1A may be applied.

FIG. 15H shows a stage in the manufacturing process where a dicing procedure is performed along dicing line 1537 to separate packages that are created on the wafer. In embodiments, this dicing line will cause all or a portion of the cap 1533 to be removed, exposing a clean side of the HOCC 1506, which is now ready for an optical coupling.

FIG. 15I shows a stage in the manufacturing process after dicing and after any residues have been removed.

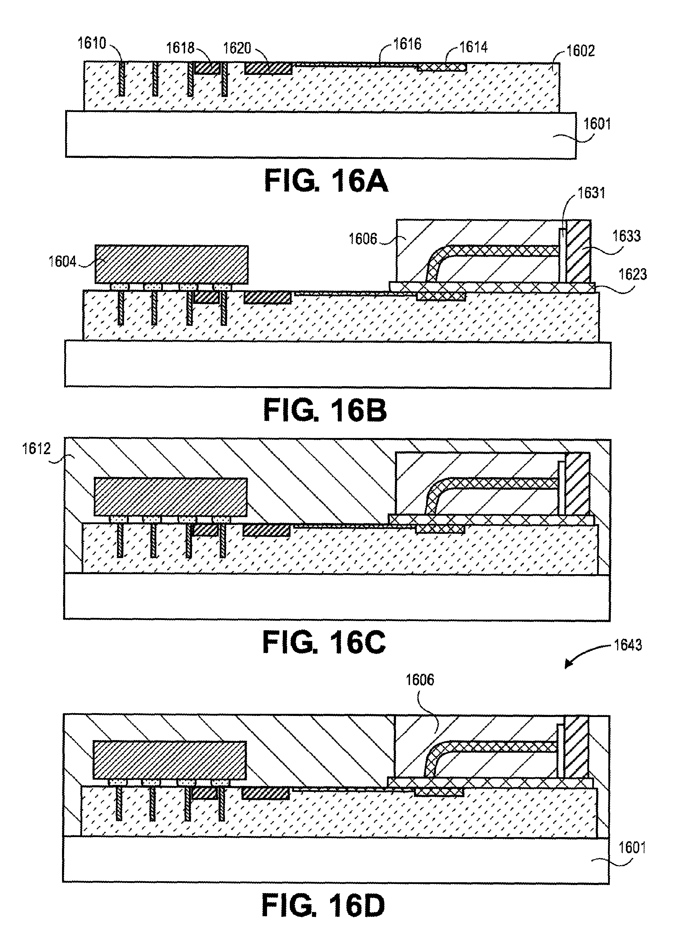

FIGs. 16A-16I illustrate stages in another manufacturing process to create a FOWLP integrated optical packet, in accordance with various embodiments. This manufacturing process may be performed using techniques, processes, apparatus, and/or systems described herein.

FIG. 16A shows a stage in the manufacturing process where a PIC 1602 is placed on a carrier wafer 1601. In embodiments, the carrier wafer may be a glass wafer or a silicon wafer. In embodiments, the PIC 1602 may include a plurality of electrically conductive TSV 1610, a photodetector 1618, a LD-MOD 1620, and optical waveguide 1616 that optically coupled with an optical coupler 1614. These may be similar to PIC 102, plurality of electrically conductive TSV 110, a photodetector 118, a LD-MOD 120, and optical waveguide 116 of FIG. 1A.

FIG. 16B shows a stage in the manufacturing process where an EIC 1604 is physically and electrically coupled to a surface of the PIC 1602, and a HOCC 1606 may be physically and optically coupled to a surface of the PIC 1602. The EIC 1604 may be similar to EIC 104 of FIG. 1A, and the HOCC 1606 may be similar to HOCC 206 of FIG. 2. An epoxy 1623, which may be similar to epoxy 923 of FIG. 9, may be used to secure the HOCC 1606 to the PIC 1602. In embodiments, the HOCC 1606 may include a cap 1633, which may be similar to cap 333 of FIG. 3 where there is a cavity 1631 between the cap and an edge of the HOCC 1606. In embodiments, the cavity 1631 may be a void space that provides an air gap.

FIG. 16C shows a stage in the manufacturing process where a mold compound 1612, which may be similar to mold 112 of FIG. 1A, may be applied to the entire structure. In embodiments, the mold 1612 may partially or fully encase the entire structure.

FIG. 16D shows a stage in the manufacturing process where a portion of the mold 1612 is ground and cleaned to top surface of the HOCC 1606.

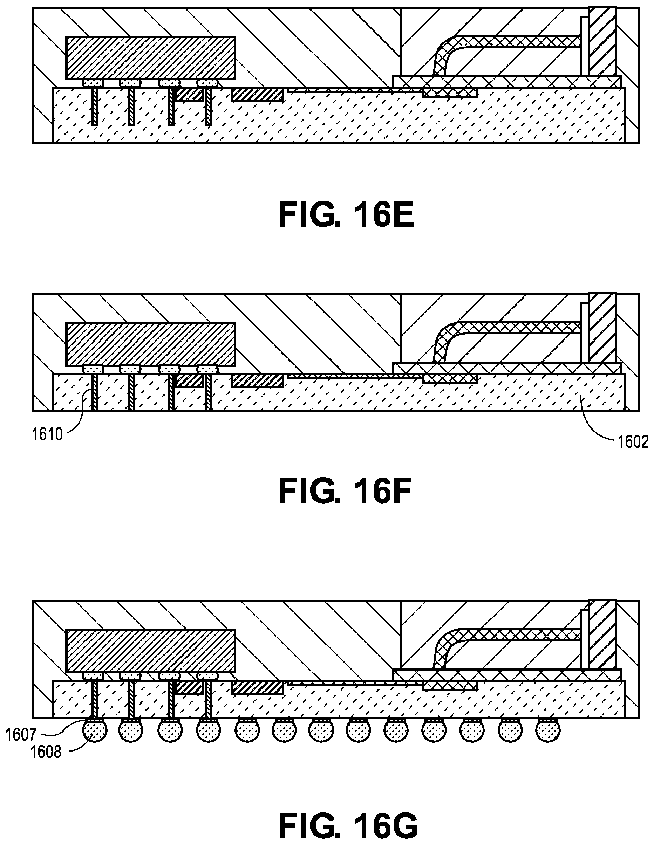

FIG. 16E shows a stage in the manufacturing process where the carrier 1601 is debonded and removed.

FIG. 16F shows a stage in the manufacturing process where the bottom side of the PIC 1602 is planarized to expose the electrically conductive TSV 1610. In embodiments, this stage may require the package to be flipped using a temporary carrier attached to the top of the mold surface.

FIG. 16G shows a stage in the manufacturing process where a redistribution layer (RDL) 1607 may be placed on the surface of the PIC 1602, and solder bumps 1608, which may be similar to bumps 108 of FIG. 1A may be applied.

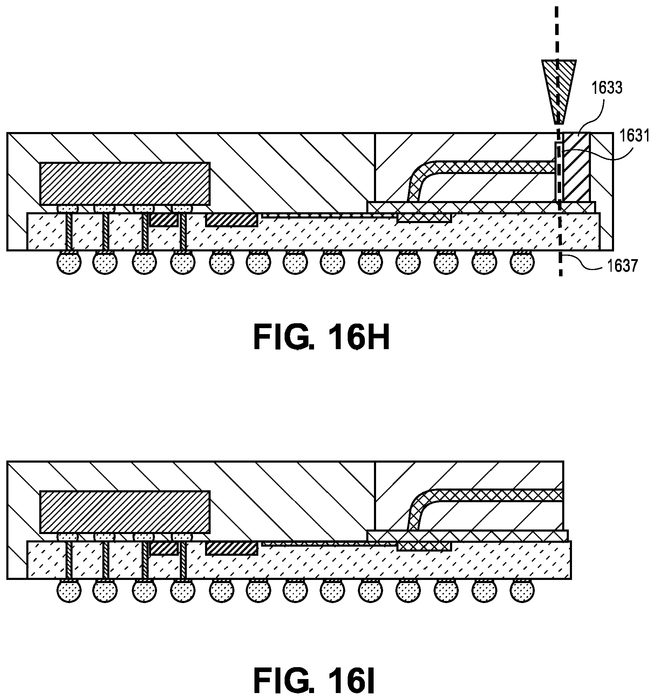

FIG. 16H shows a stage in the manufacturing process where a dicing procedure is performed along dicing line 1637 to separate packages that are created on the wafer. In embodiments, this dicing line 1637 extends through the void 1631, which will separate all or part of the cap 1633, exposing a clean side of the HOCC 1606, which is now ready for an optical coupling.

FIG. 16I shows a stage in the manufacturing process after dicing and after any residues have been removed.

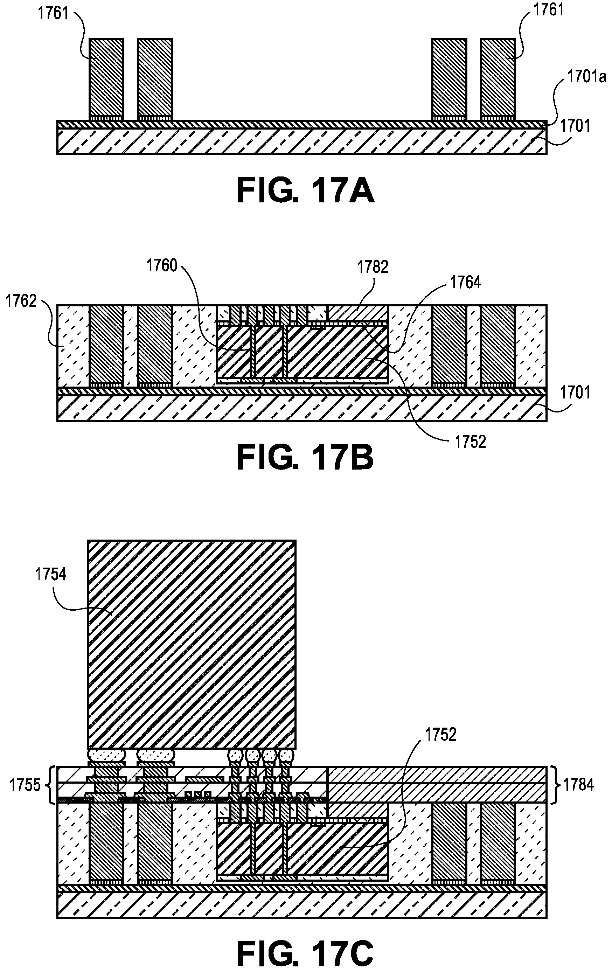

FIGs. 17A-17G illustrate stages in a manufacturing process to create an ODI integrated optical packet, in accordance with various embodiments. This manufacturing process may be performed using techniques, processes, apparatus, and/or systems described herein and may be used to manufacture an integrated optical packet similar to that described with respect to FIG. 1B.

FIG. 17A shows a stage in the manufacturing process where conductive pillars 1761, similar to conductive pillars 161 of FIG. 1B, are formed on a glass layer 1701. In embodiments, an epoxy layer 1701a may be on top of the glass layer 1701. In embodiments, the conductive pillars 1761 may be copper pillars, and may be formed using techniques known in the art.

FIG. 17B shows a stage in the manufacturing process where a PIC 1752, which may be similar to PIC 152 of FIG. 1B, is placed on the glass layer 1701. In embodiments, the PIC 1752 may include a number of conductive TSVs 1760, and also include an optical coupler 1764, which may be similar to TSV 160 and optical coupler 164 of FIG. 1B. A sacrificial material 1782 may be placed above the optical coupler 1764 to protect the optical coupler from subsequent manufacturing stages. In embodiments, a mold 1762, which may be similar to mold 162 FIG. 1B, may be applied.

FIG. 17C shows a stage in the manufacturing process where additional sacrificial layers 1784 are placed above the sacrificial layer 1782, and where various routing and other build-up layers 1755 are placed on top of and electrically coupled with the PIC 1752. An EIC 1754, which may be similar to EIC 154 of FIG. 1B, may be electrically and physically coupled to the buildup layer 1755.

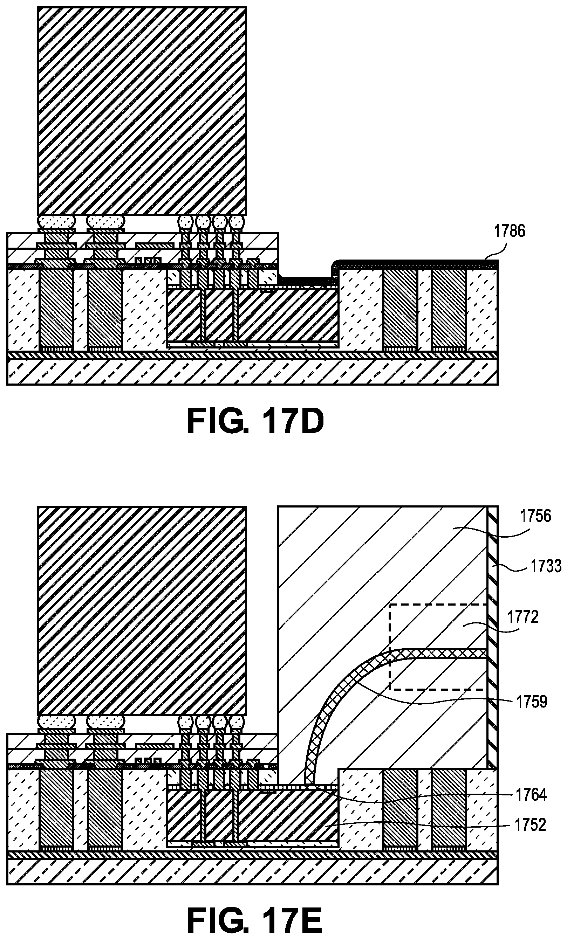

FIG. 17D shows a stage in the manufacturing process where the sacrificial film 1782 and sacrificial layer 1784 are removed, and an epoxy 1786 is applied. In embodiments, the epoxy is an optically clear epoxy optimized for suitable refractive index.

FIG. 17E shows a stage in the manufacturing process where an OCC 1756, which may be similar to OCC 156 of FIG. 1B, is coupled with the optical coupler 1764 of the PIC 1752 is optically coupled with the waveguide 1759 within the OCC 1756. In embodiments, a guide hole 1772, which may be similar to guide hole 172 of FIG. 1B, may be used to properly align a FAU (not shown) when optically coupled with the OCC 1756. A cap 1733, which may be similar to 633 of FIG. 6, may be placed on a side of the OCC 1756 and covering the ends of the waveguide 1759 and the guide holes 1772 to prevent molding material or other foreign matter from obstructing them.

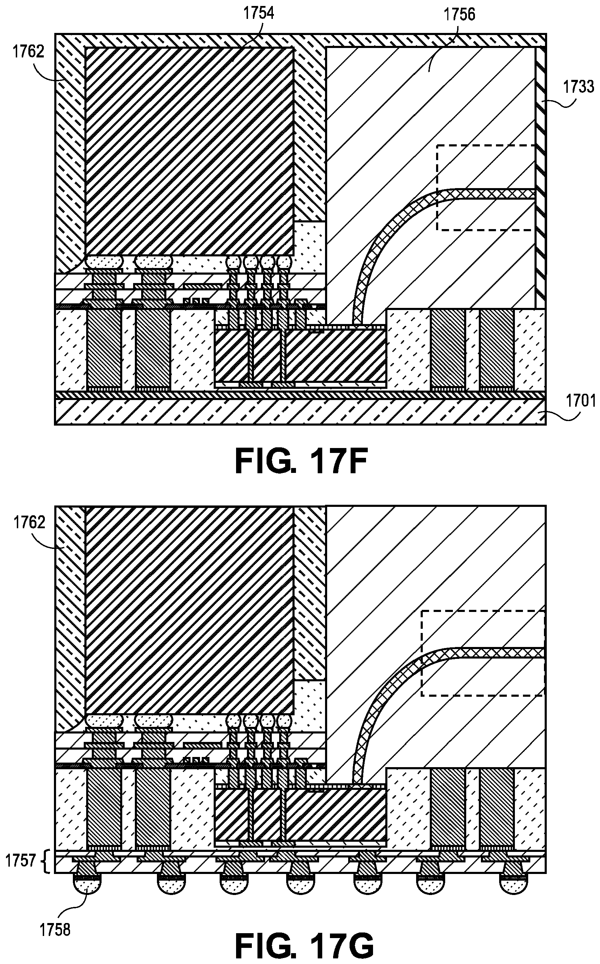

FIG. 17F shows a stage in the manufacturing process where a mold compound 1762, which may be similar to mold 162 of FIG. 1B, may be flowed around the EIC 1754, OCC 1756, and cap 1733.

FIG. 17G shows a stage in the manufacturing process where a portion of the mold compound 1762 has been removed to expose a top surface of the OCC 1756. In addition, all or part of the cap 1733 may be removed by either polishing or grinding. In addition, a buildup layer 1757, which may be similar to buildup layer 157 of FIG. 1B, may be added, with solder bumps 1758, which may be similar to solder bumps 158 of FIG. 1B, may also be attached. At this stage, a singulation process may be applied to separate the integrated optical packages on a wafer.

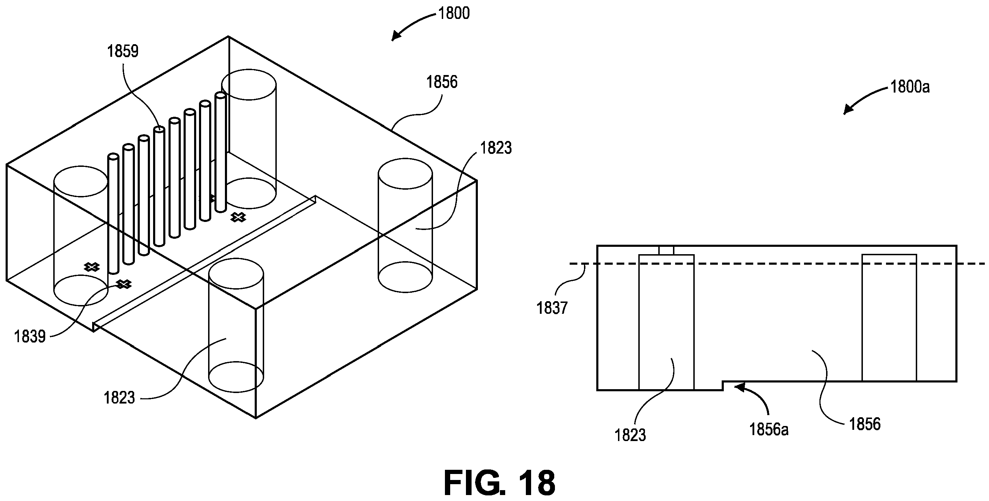

FIG. 18 illustrates an example of an ODI HOCC cap to protect optical waveguides during manufacture, in accordance with various embodiments. Diagram 1800 shows a perspective view of a VOCC 1856, which may be similar to OCC 156 of FIG. 1B. VOCC 1856 may include an embedded optical fiber array or waveguide array 1859 extending from the first side of the VOCC 1856 to a second side opposite the first side. In embodiments, guide holes 1823 may be used as an alignment mechanism for optically coupling with a FAU (not shown).

Diagram 1800a is a cross section side view of VOCC 1856, and includes guide holes 1823. In addition, a notch 1856a in the bottom surface of the VOCC 1856 may be used to facilitate optical coupling between the embedded optical fiber array or waveguide array 1859 and the optical coupler of the PIC, for example optical coupler 164 of FIG. 1B. In embodiments, a top side of the VOCC 1856 may cover the tops of the guide holes 1823. This may allow a mold compound, such as mold compound 162 of FIG. 1B, to flow over the VOCC 1856 and to not block the guide holes 1823 or facets of the embedded optical fiber array or waveguide array 1859. In embodiments, the top side of the VOCC 1856 may be polished or ground down to a polishing line 1837 to open access to the guide holes 1823, and to provide a clean facet surface for the embedded optical fiber array or waveguide array 1859. In embodiments, fiducials 1839 may be used to align the VOCC 1856 to a substrate.

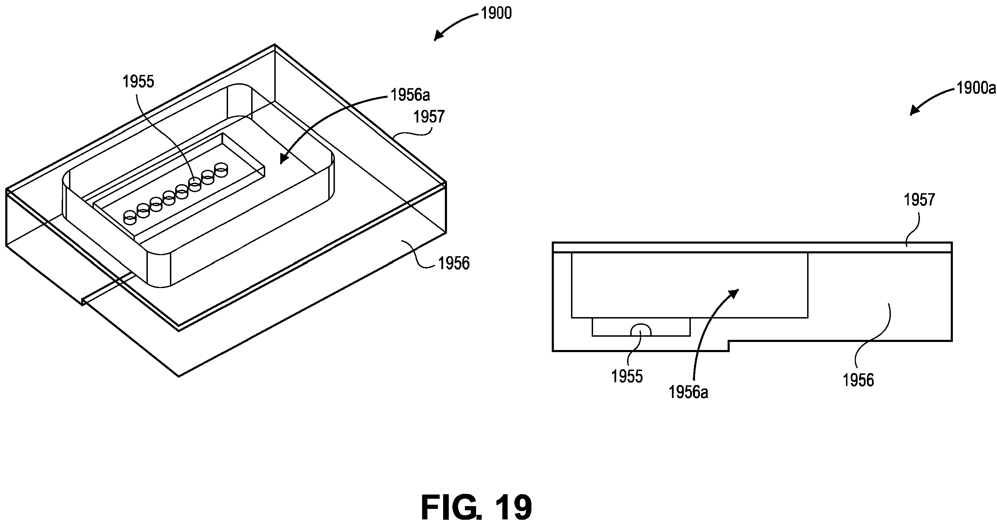

FIG. 19 illustrates an example of an ODI VOCC cap to protect an optical lens array during manufacture, in accordance with various embodiments. Diagram 1900 shows a perspective view of a VOCC 1956, that include the lens array 1955 that is within a cavity 1956a within the VOCC 1956. In embodiments, a cap 1957 may cover the cavity 1956 and prevent material, for example mold materials that may be similar to mold 162 of FIG. 1B, from blocking a surface of the lens array 1955.

Diagram 1900a is a cross section side view of VOCC 1956, and shows a polishing line 1937 to which a grinding and/or polishing process may be applied to remove the cap 1957. In embodiments, this grinding and/or polishing process may be done after the 162 of FIG. 1B has cured, to expose the lens array 1955 for optical coupling with an FAU (not shown).

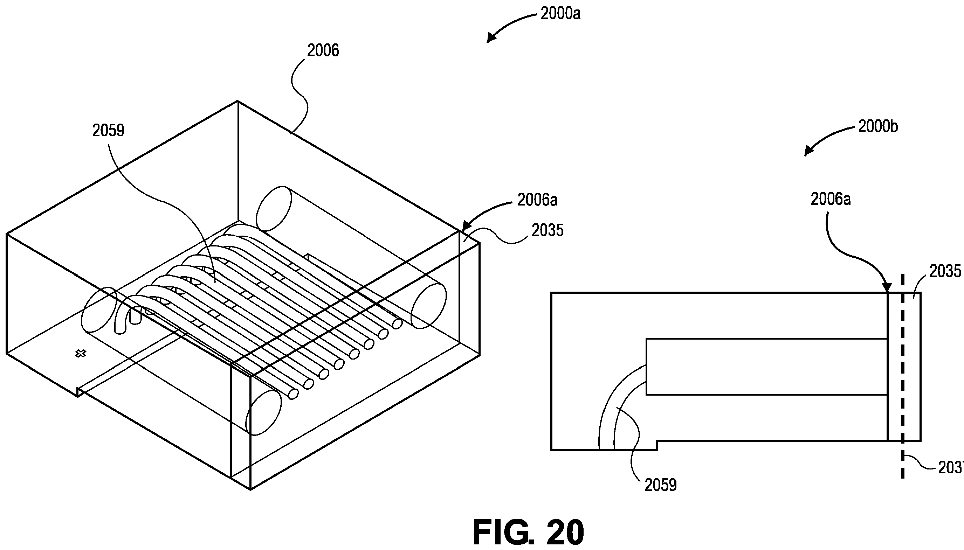

FIG. 20 illustrates another example of a FOWLP HOCC cap to protect optical waveguides during manufacture, in accordance with various embodiments. Diagram 2000a shows a perspective view of an HOCC 2006, which may be similar to OCC 200a of FIG. 2. Embedded optical fiber array or waveguide array 2059, which may be similar to embedded optical fiber array or waveguide array 259 of FIG. 2, extends from an end of the HOCC 2006 through to the bottom of the HOCC 2006.

A cap 2035 may fit over a side of the housing 2006a and cover an end of the embedded optical fiber array or waveguide array 2059. In embodiments, the temporary cap 2035 may be similar to the temporary cover 333 of FIG. 3. Diagram 2000b shows a cross section side view of the HOCC 2006 and cap 2035. A dicing line 2037 shows where the cap 2035 may be diced to expose the optical fiber array or waveguide array 2059.

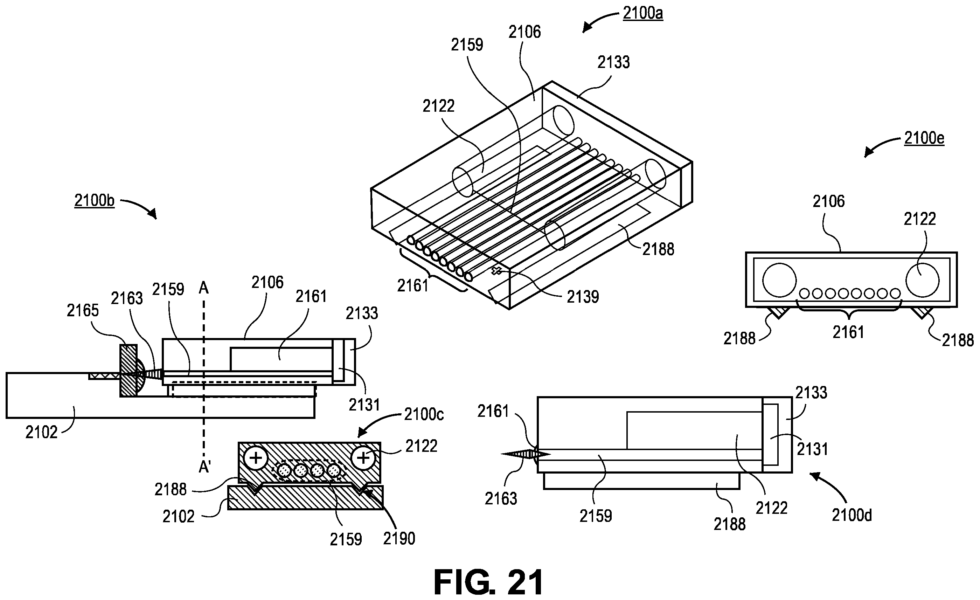

FIG. 21 illustrates another example of a FOWLP HOCC with a focusing lens array coupled with a collimation lens on a PIC with passive alignment features including v-grooves and protrusions, in accordance with various embodiments. Diagram 2100a shows a perspective view of an HOCC 2106. Diagram 2100b shows a side view of the HOCC 2106 on a PIC 2102, and diagram 2100c shows an A-A' cross section of diagram 2100b. Diagram 2100d shows a side view of the HOCC 2106, and diagram 2100e shows a front view of the HOCC 2106.

Embedded optical fiber array or waveguide array 2159, which may be similar to embedded optical fiber array or waveguide array 259 of FIG. 2, extends from an end of the HOCC 2106 through to an opposite end of the HOCC 2106. In embodiments, the embedded optical fiber array or waveguide array 2159 may be at or near at the bottom of the HOCC 2106. In embodiments, the HOCC 2106 may include alignment fiducials 2139 that may be placed on the bottom surface of the HOCC 2106 that may be used for alignment with complementary fiducials on a top surface of the PIC 2102. Guide holes 2122 within HOCC 2106 may be used for alignment of external optical fibers.

In embodiments, prior to placing the HOCC 2106 into the integrated optical package, a temporary cover 2133 may be placed on an end of the HOCC 2106 and covering an end of the embedded optical fiber array or waveguide array 2159. In embodiments, there may be a cavity 2131 between and edge of the 2133 and the HOCC 2106. In embodiments, the cavity 2131 may be a void that includes air. In embodiments, the temporary cover 2133 may be similar to the temporary covers 333, 300a, 300b, and 300c of FIG. 3.

In embodiments, the HOCC 2106 may be passively aligned with the PIC 2102 by using V-protrusions 2188 that align with V-grooves 2190 of the PIC 2102. In embodiments, the V-protrusions 2188 and V-grooves 2190 may be any complementary structures that self-align, such as but not limited to ribs and trenches, or pins and sockets. In embodiments, a focusing lens array 2161 may be coupled with the embedded optical fiber array or waveguide array 2159, and may be used to focus and/or align the light beam 2163 as it interacts with a collimation lens 2165 that maybe coupled with the PIC 2102.

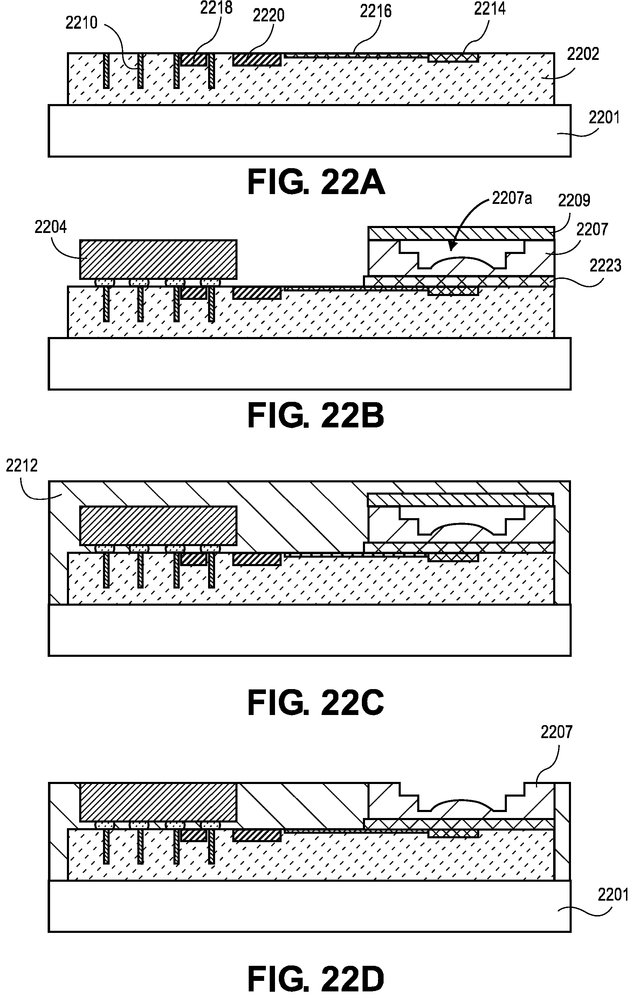

FIGs. 22A-22I illustrate stages in another manufacturing process to create a FOWLP integrated optical packet that includes a VOCC, in accordance with various embodiments. This manufacturing process may be performed using techniques, processes, apparatus, and/or systems described herein.

FIG. 22A shows a stage in the manufacturing process where a PIC 2202 is placed on a carrier wafer 2201. In embodiments, the carrier wafer may be a glass wafer or a silicon wafer. In embodiments, the PIC 2202 may include a plurality of electrically conductive TSV 2210, a photodetector 2218, a LD-MOD 2220, and optical waveguide 2216 that optically coupled with an optical coupler 2214. These may be similar to PIC 102, plurality of electrically conductive TSV 110, a photodetector 118, a LD-MOD 120, and optical waveguide 116 of FIG. 1A.

FIG. 22B shows a stage in the manufacturing process where an EIC 2204 is physically and electrically coupled to a surface of the PIC 2202, and a HOCC 2206 may be physically and optically coupled to a surface of the PIC 2202. The EIC 2204 may be similar to EIC 104 of FIG. 1A, and the VOCC 2207 may be similar to VOCC 1107 of FIG. 11. An epoxy 2223, which may be similar to epoxy 923 of FIG. 9, may be used to secure the VOCC 2207 to the PIC 2202. In embodiments, the VOCC 2207 may include a cap 2209, which may be similar to cap 1109 of FIG. 11 where there is a cavity 2207a between the cap 2209 and the interior of the VOCC 2207.

FIG. 22C shows a stage in the manufacturing process where a mold compound 2212, which may be similar to mold 112 of FIG. 1A, may be applied to the entire structure. In embodiments, the mold 2212 may partially or fully encase the entire structure.

FIG. 22D shows a stage in the manufacturing process where a portion of the mold 2212 is ground and cleaned to top surface of the VOCC 2207, and the cap 2209 is removed.

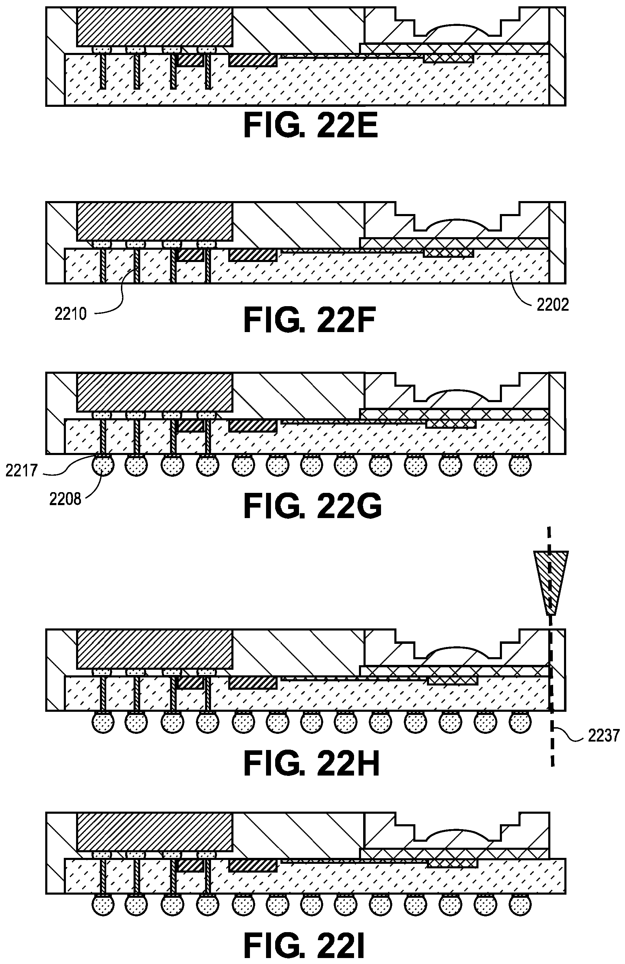

FIG. 22E shows a stage in the manufacturing process where the carrier 2201 is debonded and removed.

FIG. 22F shows a stage in the manufacturing process where the bottom side of the PIC 2202 is planarized to expose the electrically conductive TSV 2210. In embodiments, this stage may require the package to be flipped using a temporary carrier attached to the top of the mold surface.

FIG. 22G shows a stage in the manufacturing process where a redistribution layer (RDL) 2217 may be placed on the surface of the PIC 2202, and solder bumps 2208, which may be similar to bumps 108 of FIG. 1A may be applied.

FIG. 22H shows a stage in the manufacturing process where a dicing procedure is performed along dicing line 2237 to separate packages that are created on the wafer. In embodiments, this dicing line 2237 extends down a side of the VOCC 2207.

FIG. 22I shows a stage in the manufacturing process after dicing and after any residues have been removed.

FIG. 23 illustrates a process for manufacturing an integrated optical package, in accordance with the claimed invention. Process 2300 may be performed by one or more elements, techniques, or systems that may be described herein, and in particular with respect to FIGs 1A, 2 and 10.

At block 2302, the process includes providing a PIC.

At block 2304, the process further includes providing an EIC.

At block 2306, the process further includes providing an OCC.

At block 2308, the process further includes coupling the EIC with a side of the PIC.

At block 2310, the process further includes coupling the OCC with the side of the PIC.

At block 2312, the process further includes encapsulating at least a portion of the PIC, EIC, and OCC within a mold material.

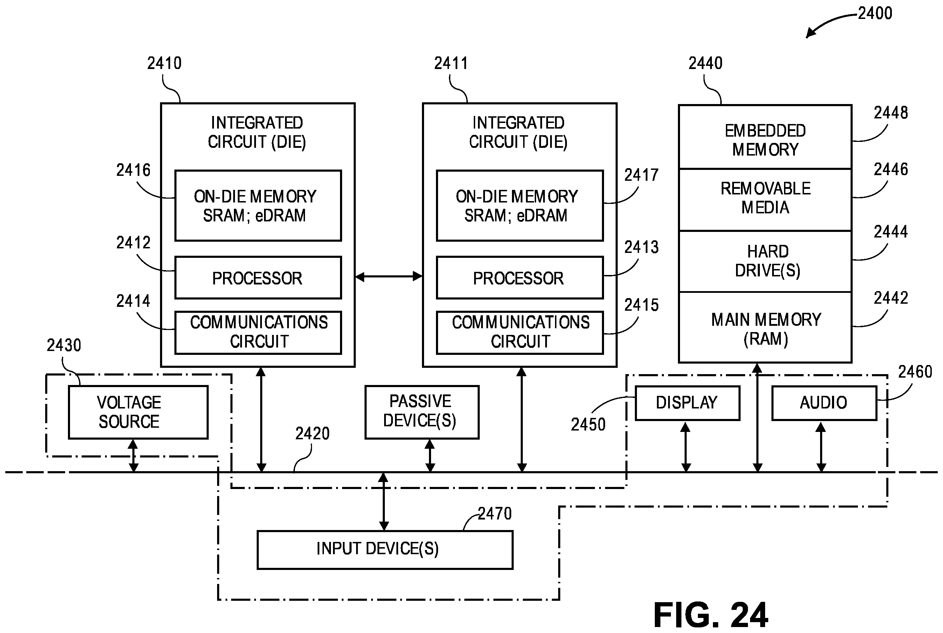

FIG. 24 is a schematic of a computer system 2400. The computer system 2400 (also referred to as the electronic system 2400) as depicted can embody integrated optical package, according to any of the several disclosed embodiments and their equivalents as set forth in this disclosure. The computer system 2400 may be a mobile device such as a netbook computer. The computer system 2400 may be a mobile device such as a wireless smart phone. The computer system 2400 may be a desktop computer. The computer system 2400 may be a hand-held reader. The computer system 2400 may be a server system. The computer system 2400 may be a supercomputer or high-performance computing system.

In an embodiment, the electronic system 2400 is a computer system that includes a system bus 2420 to electrically couple the various components of the electronic system 2400. The system bus 2420 is a single bus or any combination of busses according to various embodiments. The electronic system 2400 includes a voltage source 2430 that provides power to the integrated circuit 2410. In some embodiments, the voltage source 2430 supplies current to the integrated circuit 2410 through the system bus 2420.

The integrated circuit 2410 is electrically coupled to the system bus 2420 and includes any circuit, or combination of circuits according to an embodiment. In an embodiment, the integrated circuit 2410 includes a processor 2412 that can be of any type. As used herein, the processor 2412 may mean any type of circuit such as, but not limited to, a microprocessor, a microcontroller, a graphics processor, a digital signal processor, or another processor. In an embodiment, the processor 2412 includes, or is coupled with, integrated optical package, as disclosed herein. In an embodiment, SRAM embodiments are found in memory caches of the processor. Other types of circuits that can be included in the integrated circuit 2410 are a custom circuit or an application-specific integrated circuit (ASIC), such as a communications circuit 2414 for use in wireless devices such as cellular telephones, smart phones, pagers, portable computers, two-way radios, and similar electronic systems, or a communications circuit for servers. In an embodiment, the integrated circuit 2410 includes on-die memory 2416 such as static random-access memory (SRAM). In an embodiment, the integrated circuit 2410 includes embedded on-die memory 2416 such as embedded dynamic random-access memory (eDRAM).

In an embodiment, the integrated circuit 2410 is complemented with a subsequent integrated circuit 2411. Useful embodiments include a dual processor 2413 and a dual communications circuit 2415 and dual on-die memory 2417 such as SRAM. In an embodiment, the dual integrated circuit 2410 includes embedded on-die memory 2417 such as eDRAM.

In an embodiment, the electronic system 2400 also includes an external memory 2440 that in turn may include one or more memory elements suitable to the particular application, such as a main memory 2442 in the form of RAM, one or more hard drives 2444, and/or one or more drives that handle removable media 2446, such as diskettes, compact disks (CDs), digital variable disks (DVDs), flash memory drives, and other removable media known in the art. The external memory 2440 may also be embedded memory 2448 such as the first die in a die stack, according to an embodiment.

In an embodiment, the electronic system 2400 also includes a display device 2450, an audio output 2460. In an embodiment, the electronic system 2400 includes an input device such as a controller 2470 that may be a keyboard, mouse, trackball, game controller, microphone, voice-recognition device, or any other input device that inputs information into the electronic system 2400. In an embodiment, an input device 2470 is a camera. In an embodiment, an input device 2470 is a digital sound recorder. In an embodiment, an input device 2470 is a camera and a digital sound recorder.

As shown herein, the integrated circuit 2410 can be implemented in a number of different embodiments, including a package substrate having integrated optical package, according to any of the several disclosed embodiments and their equivalents, an electronic system, a computer system, one or more methods of fabricating an integrated circuit, and one or more methods of fabricating an electronic assembly that includes a package substrate having integrated optical package, according to any of the several disclosed embodiments as set forth herein in the various embodiments and their art-recognized equivalents. The elements, materials, geometries, dimensions, and sequence of operations can all be varied to suit particular I/O coupling requirements including array contact count, array contact configuration for a microelectronic die embedded in a processor mounting substrate according to any of the several disclosed package substrates having integrated optical package embodiments and their equivalents. A foundation substrate may be included, as represented by the dashed line of FIG. 24. Passive devices may also be included, as is also depicted in FIG. 24.

Various embodiments may include any suitable combination of the above-described embodiments including alternative (or) embodiments of embodiments that are described in conjunctive form (and) above (e.g., the "and" may be "and/or"). Furthermore, some embodiments may include one or more articles of manufacture (e.g., non-transitory computer-readable media) having instructions, stored thereon, that when executed result in actions of any of the above-described embodiments. Moreover, some embodiments may include apparatuses or systems having any suitable means for carrying out the various operations of the above-described embodiments.

The above description of illustrated embodiments, including what is described in the Abstract, is not intended to be exhaustive or to limit embodiments to the precise forms disclosed. While specific embodiments are described herein for illustrative purposes, various equivalent modifications are possible within the scope of the embodiments, as those skilled in the relevant art will recognize.

These modifications may be made to the embodiments in light of the above detailed description. The terms used in the following claims should not be construed to limit the embodiments to the specific implementations disclosed in the specification and the claims. Rather, the scope of the invention is to be determined entirely by the following claims.

## Claims

1. A method (2300) comprising:
providing (2302) a photonic integrated circuit, PIC;
providing (2304) an electronic integrated circuit, EIC;
providing (2306) an optical coupling connector, OCC;
coupling (2308) the EIC with a side of the PIC;
coupling (2310) the OCC with the side of the PIC; and
encapsulating (2312) at least a portion of the PIC, EIC, and OCC within a mold material;
**characterized in that** the OCC comprises guide holes that do not extend to the top side of the OCC, wherein the top side of the OCC is polished or ground down to a level of the guide holes after encapsulating the PIC, EIC, and OCC.

2. The method (2300) of claim 1,
wherein coupling (2308) the EIC with the side of the PIC further includes electrically coupling the EIC with the PIC.

3. The method of claim 2, wherein the side of the PIC is a first side and further including a second side opposite the first side; and further including one or more electrically conductive vias extending from the first side of the PIC to the second side of the PIC, wherein the EIC is electrically coupled with the one or more electrically conductive vias.

4. The method of claim 1, wherein coupling (2310) the OCC further includes optically coupling one or more optical waveguides in the OCC to one or more optical couplers in the PIC.

5. The method of claim 4, further comprising, prior to coupling (2310) the OCC with the side of the PIC, placing cap on a side of the OCC proximate to a termination of the one or more optical waveguides in the OCC.

## Patentansprüche

1. Verfahren (2300), das Folgendes umfasst:
Bereitstellen (2302) einer photonischen integrierten Schaltung, PIC;
Bereitstellen (2304) einer elektronischen integrierten Schaltung, EIC;
Bereitstellen (2306) eines optischen Kopplungsverbinders, OCC;
Koppeln (2308) der EIC mit einer Seite der PIC;
Koppeln (2310) des OCC mit der Seite der PIC; und
Einkapseln (2312) wenigstens eines Abschnitts der PIC, der EIC und des OCC in ein Gießmaterial;
**dadurch gekennzeichnet, dass** der OCC Führungslöcher aufweist, die nicht zur Oberseite des OCC verlaufen, wobei die Oberseite des OCC bis auf ein Niveau der Führungslöcher poliert oder geschliffen wird, nachdem die PIC, die EIC und der OCC eingekapselt worden sind.

2. Verfahren (2300) nach Anspruch 1,
wobei das Koppeln (2308) der EIC mit der Seite der PIC ferner das elektrische Koppeln der EIC mit der PIC umfasst.

3. Verfahren nach Anspruch 2, wobei die Seite der PIC eine erste Seite ist und diese ferner eine zweite Seite gegenüber der ersten Seite aufweist; und ferner ein oder mehrere elektrisch leitende Durchgangslöcher aufweist, die von der ersten Seite der PIC zu der zweiten Seite der PIC verlaufen, wobei die EIC mit dem einen oder den mehreren elektrisch leitenden Durchgangslöchern elektrisch gekoppelt ist.

4. Verfahren nach Anspruch 1, wobei das Koppeln (2310) des OCC ferner das optische Koppeln eines oder mehrerer optischer Wellenleiter in dem OCC mit einem oder mehreren optischen Kopplern in der PIC umfasst.

5. Verfahren nach Anspruch 4, das ferner vor dem Koppeln (2310) des OCC mit der Seite der PIC das Anordnen einer Kappe auf einer Seite des OCC in der Nähe eines Abschlusses des einen oder der mehreren optischen Wellenleiter in dem OCC umfasst.

## Revendications

1. Procédé (2300) comprenant les étapes suivantes :
fournir (2302) un circuit intégré photonique, PIC ;
fournir (2304) un circuit intégré électronique, EIC ;
fournir (2306) un connecteur de couplage optique, OCC ;
coupler (2308) l'EIC avec un côté du PIC ;
coupler (2310) l'OCC avec le côté du PIC ; et
encapsuler (2312) au moins une partie du PIC, de l'EIC et de l'OCC à l'intérieur d'un matériau de moule ;
**caractérisé en ce que** l'OCC comprend des trous de guidage qui ne s'étendent pas jusqu'à la face supérieure de l'OCC, la face supérieure de l'OCC étant polie ou meulée jusqu'à un niveau des trous de guidage après encapsulation du PIC, de l'EIC et de l'OCC.

2. Procédé (2300) selon la revendication 1,
dans lequel le couplage (2308) de l'EIC avec le côté du PIC comprend en outre le couplage électrique de l'EIC avec le PIC.

3. Procédé selon la revendication 2, dans lequel le côté du PIC est un premier côté et comprenant en outre un deuxième côté opposé au premier côté ; et comprenant en outre un ou plusieurs trous d'interconnexion électriquement conducteurs s'étendant du premier côté du PIC au deuxième côté du PIC, où le EIC est électriquement couplé avec les un ou plusieurs trous d'interconnexion électriquement conducteurs.

4. Procédé selon la revendication 1, dans lequel le couplage (2310) de l'OCC comprend en outre le couplage optique d'un ou plusieurs guides d'ondes optiques dans l'OCC à un ou plusieurs coupleurs optiques dans le PIC.

5. Procédé selon la revendication 4, comprenant en outre, avant le couplage (2310) de l'OCC avec le côté du PIC, de mettre en place un capuchon sur un côté de l'OCC à proximité d'une terminaison des un ou plusieurs guides d'ondes optiques dans l'OCC.
